# EUROPEAN PATENT APPLICATION

(11) **EP 2 210 648 A1**
(43) Date of publication of application: **28.07.2010**
(21) Application number: 07828262.1
(22) Date of filing: 19.09.2007
(51) Int. Cl.: A63C 5/00, A63C 17/01

(54) **PLAY APPARATUS AND ELASTIC MECHANISM**

(71) Applicant: Ota, Junzo, Tokyo 177-0031 (JP)
(72) Inventor: Ota, Junzo, Tokyo 177-0031 (JP)
(74) Representative: Piésold, Alexander James
(86) International application number: PCT/JP2007/068167
(87) International publication number: WO 2009/037750

(57) **Abstract**

A slide play apparatus for sliding not only on the surface of snow but also on the surfaces of lawn and sand. The slide play apparatus cushions an impact from a sliding surface to a player and is excellent in operability. The play apparatus (1) includes a body part (2) having a generally cylindrical shape and including a lower board (7) which contacts with the sliding surface, an upper board (6) positioned over the lower board (7), a nose plate (8) which connects one end of the lower board (7) with that of the upper board (6), and a tail plate (9) which connects the other end of the lower board (7) with that of the upper board (6), and a blade part (3) which is provided inside the body part (2) and made of a pair of blades disposed obliquely with respect to the longitudinal direction axis of the lower board (7) so as to present a substantially X-shape in a plan view. The play apparatus is **characterized in that** each blade is an elastic sheet member and that each blade has a contact part brought into contact with the upper surface of the lower board (7), curved parts provided on the side of the nose plate (8) and on the side of the tail plate, and a fixed part fixed to the lower surface of the upper board (6).

## Description

### TECHNICAL FIELD

The present invention relates to a play apparatus for sliding on surfaces of snow, a lawn, and the like.

### BACKGROUND ART

As a play apparatus for sliding on a slant by a player's own weight, a snowboard and a sleigh for sliding on a surface of snow are mainly known. For example, a conventional snowboard consists of one board formed like a substantial ellipse in a plan view thereof; a lower surface thereof is used as a sliding surface and an upper surface thereof is used as a boarding surface of a player. The player moves her/his weight (movement of center of gravity), thereby transmits a force to the board, and can make right and left turns, and the like (see Japanese Patent Laid-Open Publication No. 2004-160095).

### DISCLOSURE OF THE INVENTION

### OBJECT OF THE INVENTION

However, in a conventional snowboard and sleigh there exists only one board between a sliding surface and a player, and an impact received by her/him is very large. Furthermore, because the conventional snowboard and sleigh consist of one board, there is a problem that: a player's weight movement (movement of center of gravity) is difficult to be transmitted to the board; and the snowboard and the sleigh are poor in operability.

The present invention is created to solve such a problem and relates to a play apparatus for sliding on not only a surface of snow but also those of a lawn, sand, and the like; an object of the invention is to provide the apparatus which cushions an impact from a sliding surface to a player and is excellent in operability. Furthermore, an object of the invention is to provide an elastic mechanism for achieving to cushion the impact.

### MEANS FOR SOLVING THE OBJECT

The invention to solve such objects is a play apparatus comprising: a body part having a substantially tubular shape and including a lower board configured to be contacted with a sliding surface, an upper board configured to be positioned over the lower board, a nose plate configured to connect one end of the lower board to that of the upper board, and a tail plate configured to connect the other end of the lower board to that of the upper board; and a blade part configured to be provided inside the body part and to consist of a pair of blades arranged obliquely with respect to a longitudinal direction axis of the lower board so as to present a substantially X-shape in a plan view thereof, wherein each blade is a sheet-like elastic member and has a contact part contacted with an upper surface of the lower board, curved parts configured to be provided on a side of the nose plate and that of the tail plate, and a fixation part configured to be fixed to a lower surface of the upper board.

According to such a configuration, because the lower board and the upper board positioned over the lower board are connected to the nose plate and the tail plate and are formed to be a substantially tubular shape, it is possible for the nose plate and the tail plate to play a role of a cushion and to cushion an impact to a player. Furthermore, because the blade part is provided inside the body part, it is possible to further cushion the impact. Furthermore, the blade part is provided so as to present the X-shape in a plan view thereof, it is possible to flexibly respond to a player's weight movement (movement of center of gravity) acting on the upper board. Thus it is possible to enhance an operability of the play apparatus.

Furthermore, the invention preferably includes a handle mechanism unit configured to have a handle part vertically provided on the side of the nose plate of the upper board and gripped by a player, and a seat mechanism unit configured to be installed on the side of the tail plate of the upper board and to have a seat part seated by her/him.

According to such a configuration, for example, when a player sits on the upper board and uses the play apparatus as a sleigh, by providing the apparatus with the seat part and the handle part, her/his posture is stable; and by providing the apparatus with the handle part vertically provided from the upper board, she/he easily moves her/his weight movement. Thus it is possible to enhance an operability of the play apparatus.

Furthermore, the invention preferably comprises: a base shaft part configured to be projectingly provided outside in a width direction of the upper board from an edge thereof; a push plate configured to be rotatably attached to the base shaft part; and a brake part configured for a player to push a lower end of the push plate against the sliding surface and to perform braking.

According to such a configuration, for example, when a player sits on the upper board and uses the play apparatus as a sleigh, it is possible to push the push plate, for example, by means of her/his foot and to easily stop the apparatus by providing the apparatus with the brake part.

Furthermore, according to the invention, the brake part preferably comprises a coil spring wound around the base shaft part; one end of the coil spring is preferably configured to abut with the upper board, and the other end thereof is preferably configured to abut with a reverse side of the push plate.

According to such a configuration, for example, when a player sits on the upper board and uses the play apparatus as a sleigh, it is possible to enhance a close contact between her/his foot and the push plate, if she/he removes her/his foot from the push plate because the push plate attempts to return to an original position by a torsional reaction force of the coil spring.

Furthermore, the invention preferably comprises: the seat mechanism unit configured to have the seat part, a base part installed at the upper board, and a hinge part connecting the side of the nose plate of the seat part and that of the nose plate of the base part; a stopper part configured to have a hollow pipe extended in a width direction of the upper board, a contact part configured to be formed slantingly to a side of the tail plate from an end of a shaft part inserted in the hollow pipe toward the sliding surface, an abutting part configured to be extended from an end of the shaft part and to abut with the seat part; and a coil spring whose one end configured to abut with a reverse side and the other end configured to hold the stopper part, wherein when the player sits on the seat part, the abutting part turns around the shaft part by her/his load, and wherein when the contact part is removed from a sliding surface and she/he is away from the seat part, the contact part contacts the sliding surface by a reaction force of the coil spring.

According to such a configuration, for example, when a player sits on the upper board and uses the play apparatus as a sleigh, when she/he is away from the seat part, because the stopper part contacts the sliding surface, for example, it is possible to prevent the apparatus from sliding on a slant without her/his getting on the apparatus. Furthermore, by a player sitting on the seat part, because the abutting part turns around the shaft part of the stopper part and the contact part is separated from the sliding surface, it is possible to automatically release the stopper.

Furthermore, according to the invention, a protrusion strip protrudingly provided under the seat part and a depressed portion depressingly provided at the base part are preferably engaged.

According to such a configuration, the protrusion strip of the seat part and the depressed portion of the base part are engaged with each other, and thereby it is possible to stably form the seat part.

Furthermore, the invention preferably comprises a drive mechanism unit configured to have caterpillars contacting the sliding surface at one portion of the lower board.

According to such a configuration, it is possible to slide on a slant by means of the caterpillars by themselves.

Furthermore, according to the invention, tyres configured to be contacted with a running (sliding) surface preferably are attached to the blades.

According to such a configuration, it is possible to use the play apparatus not only on a snow surface but also on a running surface such as a flat ground and a road surface.

Furthermore, according to the invention, a width of the lower board is preferably narrower than that of the upper board.

According to such a configuration, because a friction resistance against a sliding surface is small, it is possible to increase a sliding speed; because a range of transmitting a player's weight is small, she/he can easily make a turn.

Furthermore, the invention to solve the objects is an elastic mechanism configured to be provided inside an interval between a lower board and an upper board positioned over the lower board and to consist of a pair of blades obliquely provided with respect to a longitudinal direction axis of the lower board so as to present a substantially X-shape in a plan view thereof, wherein each of the blades is a sheet-like elastic member and comprises a contact part contacted with an upper surface of the lower board, curved parts provided on both sides of the contact part, and a fixation part fixed to a lower surface of the upper board.

According to such a configuration, because the sheet-like elastic member is provided between the upper board and the lower board and the curved parts of the elastic member play a role of a cushion, it is possible to cushion an impact to the upper board. Furthermore, because the pair of the sheet-like elastic members are provided in the X-shape in a plan view thereof, it is possible to flexibly respond to a load (force) acting on the upper board from various directions.

### EFFECT OF THE INVENTION

According to the invention, it is possible to provide a play apparatus for sliding on not only a snow surface but also a lawn surface, a sand surface, and the like, which the apparatus cushions an impact to a player and is excellent in operability. Furthermore, it is possible to provide an elastic mechanism which cushions the impact.

### BRIEF DESCRIPTION OF THE DRAWINGS

FIG. 1 is a perspective view showing a play apparatus relating to a first embodiment of the present invention.
FIGS. 2A to 2D are side views showing the play apparatus relating to the first embodiment: FIG. 2A is a side view of the play apparatus; FIG. 2B is a side view of a body part; FIG. 2C is an F-F section view in FIG. 2B; and FIG. 2D is an enlarged view in a G portion of FIG. 2C.
FIG. 3 is a plan view showing the play apparatus relating to the first embodiment.
FIG. 4 is a rear view showing the play apparatus relating to the first embodiment.
FIG. 5 is a front view showing the play apparatus and seen from a side of a nose plate relating to the first embodiment.
FIGS. 6A to 6C are drawings showing blades relating to the first embodiment: FIG. 6A is a perspective view; FIG. 6B is an H-H section view of FIG. 6A; and FIG. 6C is an enlarged view of an I portion of FIG. 6B. FIG. 7 is a D-D section view of FIG. 2A.
FIG. 8 is an E-E section view of FIG. 2A.
FIG. 9 is an A-A section view of FIG. 4.
FIG. 10 is a B-B section view of FIG. 4.
FIG. 11 is a C-C section view of FIG. 4.
FIG. 12 is a front view showing a stationary state of the play apparatus relating to the first embodiment and a state of a player's weight vertically acting on the apparatus.
FIG. 13 is a drawing showing an operation state of the play apparatus relating to the first embodiment and a state of a player having moved her/his weight on her/his feet along a travelling direction.
FIGS. 14A and 14B are drawings showing operation states of the play apparatus relating to the first embodiment: FIG. 14A is a front view showing a state of a player having moved her/his weight on a front side (toe side) of her/his foot; and FIG. 14B is a front view showing a state of a player having moved her/his weight on a rear side (ankle side) of her/his foot.
FIG. 15 is a drawing showing an operation state of the play apparatus relating to the first embodiment, and a section view in a case of the play apparatus facing a direction of a center portion C in a rubbed part La.
FIG. 16 is a drawing showing an operation state of the play apparatus relating to the first embodiment, and a perspective view in a case of a turn being made.
FIG. 17 is a perspective view showing a second embodiment of the invention.
FIGS. 18A to18C are perspective views showing a third embodiment of the invention: FIG. 18A is a perspective view showing a play apparatus; FIG. 18B is a V-V section view of FIG. 18A; and FIG. 18C is a side section view showing a body part.
FIGS. 19A and 19B are drawings showing a support part relating to the third embodiment: FIG. 19A is a perspective view; and FIG. 19B is a side view.
FIG. 20 is an enlarged view of a joining part relating to the third embodiment.
FIG. 21 is a side view of a play apparatus relating to a fourth embodiment of the invention.
FIG. 22 is a plan view of the play apparatus relating to the fourth embodiment
FIG. 23 is a I-I section view of FIG. 21.
FIG. 24 is a II-II section view of FIG. 22.
FIG. 25 is a III-III section view of FIG. 22.
FIG. 26 is a IV-IV section view of FIG. 22.
FIG. 27 is a V-V section view of FIG. 22.
FIG. 28 is a VI-VI section view of FIG. 22.
FIG. 29 is a VII-VII section view of FIG. 22.
FIG. 30 is a plan view of a stopper part relating to the fourth embodiment.
FIG. 31 is a partially exploded side view showing a rear side in a travelling direction of a play apparatus relating to a fifth embodiment of the invention.
FIG. 32 is a partially exploded plan view showing the rear side in the travelling direction of the play apparatus relating to the fifth embodiment.
FIG. 33 is a partially exploded plan view showing a play apparatus relating to a sixth embodiment of the invention.
FIG. 34 is a perspective view showing a tyre relating to the sixth embodiment.
FIG. 35 is a partially exploded plan view showing a tyre relating to the sixth embodiment.
FIG. 36 is a partially exploded plan view showing an operation of the play apparatus relating to the sixth embodiment.

### DESCRIPTION OF THE SYMBOLS

- 1: Play Apparatus
- 2: Body Part
- 3: Blade Part
- 3a: Upper Layer Blade
- 3b: Lower Layer Blade
- 6: Upper Board
- 7: Lower Board
- 8: Nose Plate
- 9: Tail Plate
- 210: Handle Mechanism Unit
- 230: Seat Mechanism Unit

### BEST MODE(S) FOR CARRYING OUT THE INVENTION

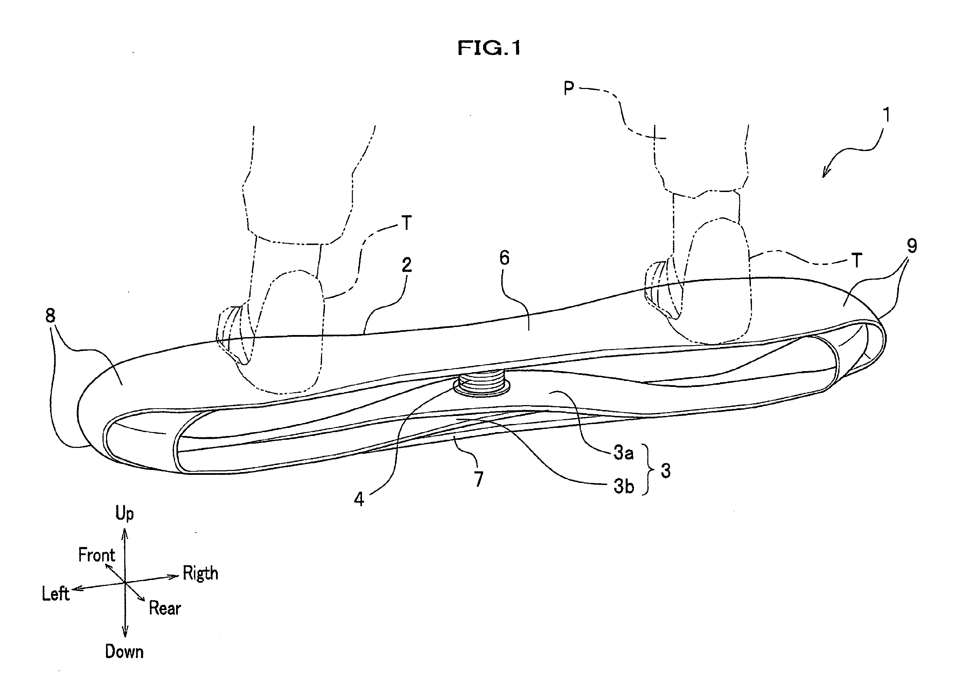

Embodiments of the present invention will be described in detail with reference to drawings. In a description a same number will be appended to a same element, and a duplicate description thereof will be omitted. In addition, up and down, left and right, and front and rear in a description will follow arrow marks in FIG. 1 as far as not specifically mentioned.

### <First Embodiment>

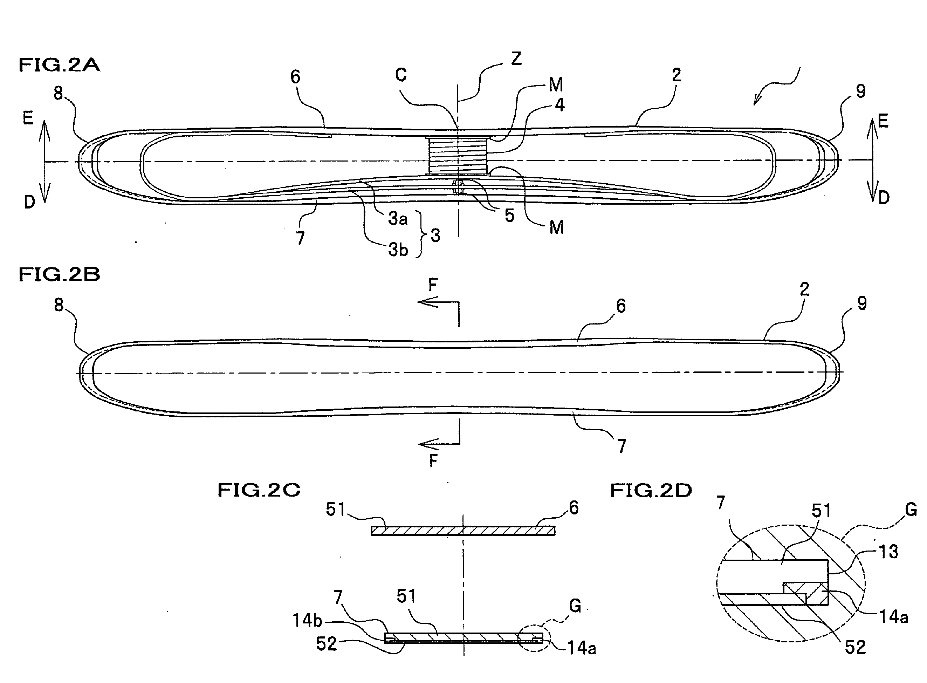

As shown in FIGS. 1 and 2A to 2D, a first embodiment relating to a play apparatus 1 comprises: a body part 2 configured to present a substantially elliptical tubular shape; a blade 3 part configured to consist of an upper layer blade 3a and a lower layer blade 3b; a spring 4 configured to be provided between an upper board 6 and sliding board 7 of the body part 2; and support parts 5, 5 (see FIG. 2A) configured to be provided at a portion (center portion C) where the blade 3a and the blade 3b intersect.

As shown in FIGS. 1, 2A, and 2B, the body part 2 comprises the upper board 6 configured to be boarded by a player P, the sliding board 7 configured to be contacted with a sliding surface, a nose plate 8 configured to connect a left end of the upper board 6 and that of the sliding board 7, and a tail plate 9 configured to connect a right end of the upper board 6 and that of the sliding board 7. As shown in FIGS. 2A and 2B, the body part 2 presents a substantially elliptical shape in a side view thereof and is substantially symmetrical with respect to a vertical axis Z.

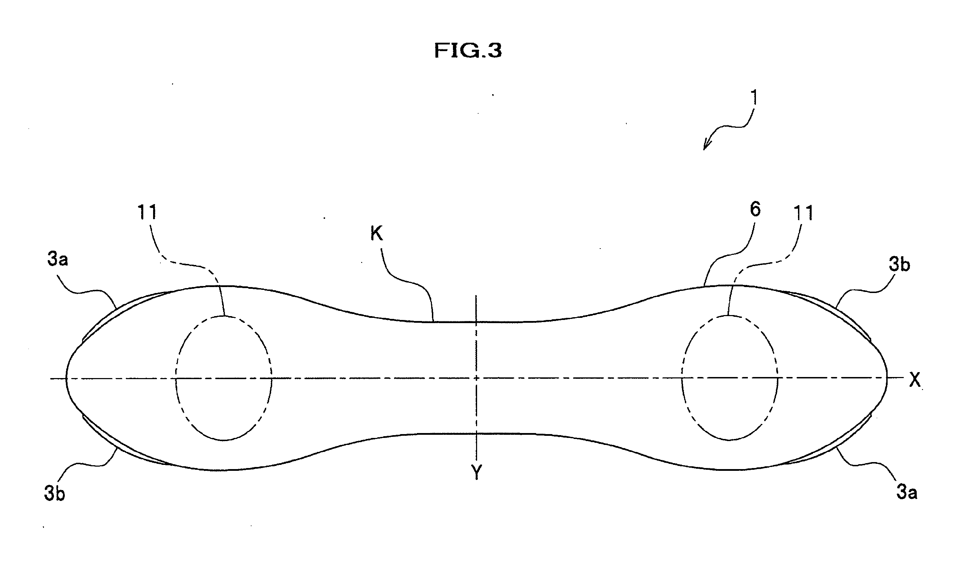

The upper board 6 is, as shown in FIG. 3, a substantially elliptical shape having a constriction K in middle in a plan view thereof and is formed so as to be symmetrical with respect to a longitudinal direction axis X and a width direction axis Y.
An upper surface of the upper board 6 has flat boarding portions 11, 11 boarded by the player P. To a lower surface of the upper board 6 is fixed the blade 3 described later. On an upper surface of boarding portions 11 are installed foot fasteners T (see FIG. 1), in order to fix player P's feet. It is possible to appropriately adjust positions of the foot fasteners T according to a height, play style, and the like of the player P. With respect to the foot fasteners T, a publicly known technology such as a binding may be used. In addition, the constriction K may also not be provided.

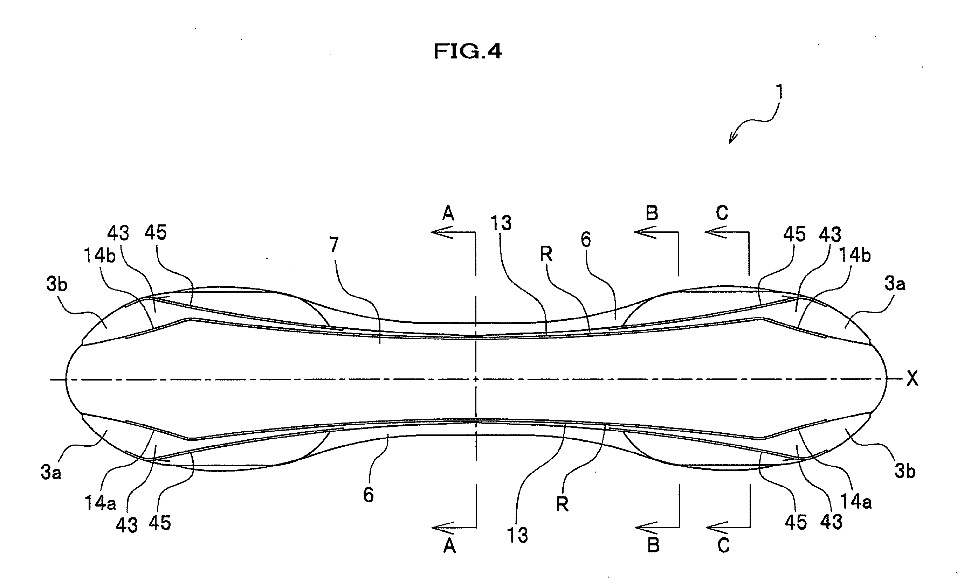

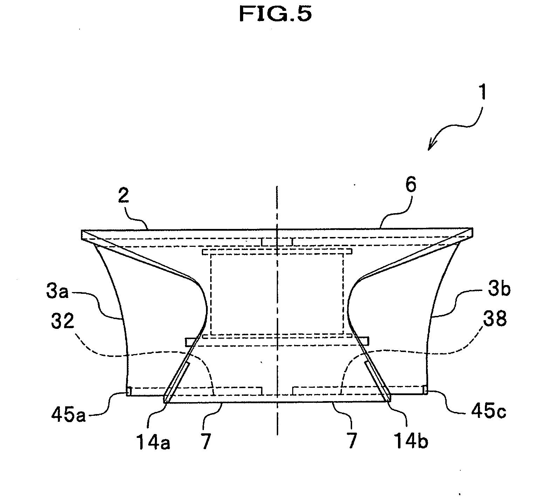

As shown in FIGS. 2C, 2D, and 4, the sliding board 7 is a flat board, and at both outer end portions 13, 13 thereof are arranged first edges 14a, 14b made of carbon steel. An upper surface of the sliding board 7 contacts the blade 3 described later. Furthermore, as shown in FIG. 4, at the both outer end portions 13, 13 are provided first side curves R (for example, a side curve radius 8.8m), respectively. A width of the sliding board 7 is, as shown in FIG. 5, formed to be narrower than that of the upper board 6. In addition, in the first embodiment, although the first side curve R is provided at each outer end portion 13, the invention is not limited thereto; the outer end portion 13 may be formed to be a straight line.

As shown in FIGS. 1, 2A, and 2B, the nose plate 8 connects the left end of the upper board 6 and that of the sliding board 7; the tail plate 9 connects the right end of the upper board 6 and that of the sliding board 7. The nose plate 8 and the tail plate 9 are curvedly formed to be protruded to both outsides, respectively.

In addition, in the first embodiment, although the sliding board 7 is formed to be like a flat sheet, the invention is not limited thereto; a camber (not shown) may also be provided so as to mound a middle portion of the sliding board 7.
Furthermore, with respect to the first embodiment, the body part 2 can equally respond by being formed to be substantially symmetrical with respect to the longitudinal direction axis X, the width direction axis Y, and the vertical axis Z even if any one of left and right feet is front with respect to a travelling direction. In the first embodiment, although the body part 2 is formed as described above, the invention is not limited thereto; the body part 2 may also be formed to be asymmetrical.
Furthermore, in the first embodiment, although the nose plate 8 and the tail plate 9 are formed as described above, the invention is not limited thereto; for example, they may also be formed to be vertical with respect to the sliding board 7. In addition, the nose plate 8 and the tail plate 9 may also be formed to be a streamline.

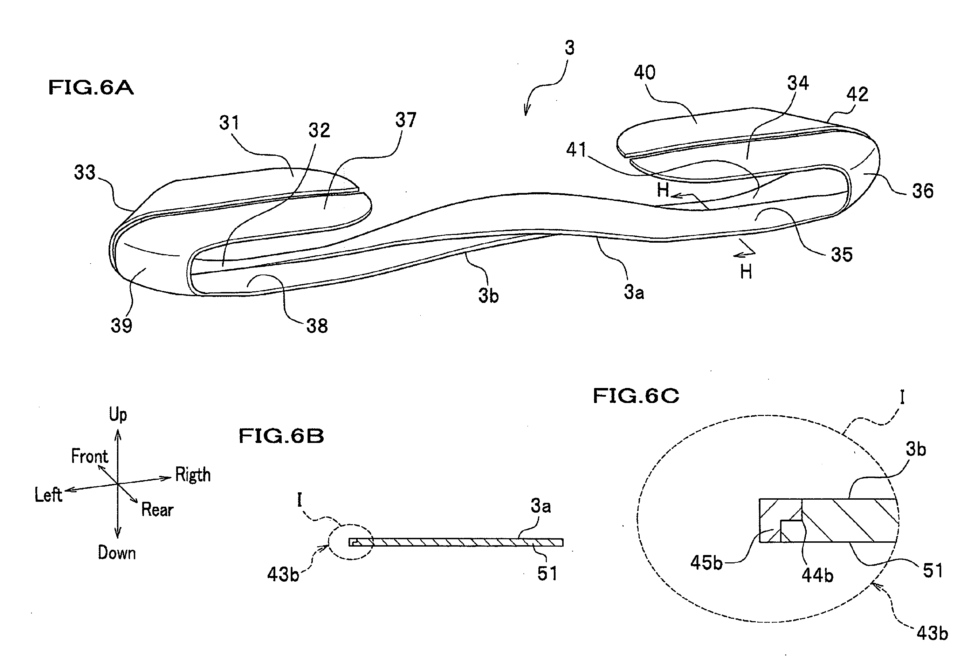

As shown in FIG. 6A, the blade part 3 presents a substantially X-shape in a plan view thereof and comprises the upper layer blade 3a positioned at an upper side and the lower layer blade 3b positioned at a lower side. The upper layer blade 3a and the lower layer blade 3b are a sheet-like elastic member formed by folding a sheet. The upper layer blade 3a and the lower layer blade 3b are a substantially equivalent shape and present a substantially C-letter shape in a side view thereof. The blade part 3 is provided inside the body part 2 and thereby enhances an elasticity of the play apparatus 1. In addition, in the invention the blade part 3 is also called an elastic mechanism unit.

Hereafter in a description, as shown in FIG. 1, a player P's left foot is assumed to get on a left side of the play apparatus 1.
As shown in FIG. 1 and 6A, the upper layer blade 3a comprises: a left-foot front-side fixation part 31 configured to be fixed to the-lower surface of the upper board 6 at a left-foot front-side (toe side) portion; a left-foot front-side contact part 32 configured to be positioned below the fixation part 31 and to be contacted with the upper surface of the sliding board 7; a left-foot front-side curved part 33 configured to connect the fixation part 31 and the contact part 32; a right-foot rear-side fixation part 34 configured to be fixed to the lower surface of the upper board 6 at a right-foot rear-side (ankle side) portion; a right-foot rear-side contact part 35 configured to be positioned below the fixation part 34 and to be contacted with the upper surface of the sliding board 7; and a right-foot rear-side curved part 36 configured to connect the fixation part 34 and the contact part 35.

As shown in FIG. 1 and 6A, the lower layer blade 3b comprises: a left-foot rear-side fixation part 37 configured to be fixed to the lower surface of the upper board 6 at a left-foot rear-side (toe side) portion; a left-foot rear-side contact part 38 configured to be positioned below the fixation part 37 and to be contacted with the upper surface of the sliding board 7; a left-foot rear-side curved part 39 configured to connect the fixation part 37 and the contact part 38; a right-foot front-side fixation part 40 configured to be fixed to the lower surface of the upper board 6 at a right-foot front-side (toe side) portion; a right-foot front-side contact part 41 configured to be positioned below the fixation part 40 and to be contacted with the upper surface of the sliding board 7;and a right-foot front-side curved part 42 configured to connect the fixation part 40 and the contact part 41.
In addition, the left-foot front-side fixation part 31, the right-foot rear-side fixation part 34, the left-foot rear-side fixation part 37, and the right-foot front-side fixation part 40 are also simply called a fixation part. Furthermore, the left-foot front-side contact part 32, the right-foot rear-side contact part 35, the left-foot rear-side contact part 38, and the right-foot front-side contact part 41 are also simply called a contact part. Furthermore, the left-foot front-side curved part 33, the right-foot rear-side curved part 36, the left-foot rear-side curved part 39, and the right-foot front-side curved part 42 are also simply called a curved part.

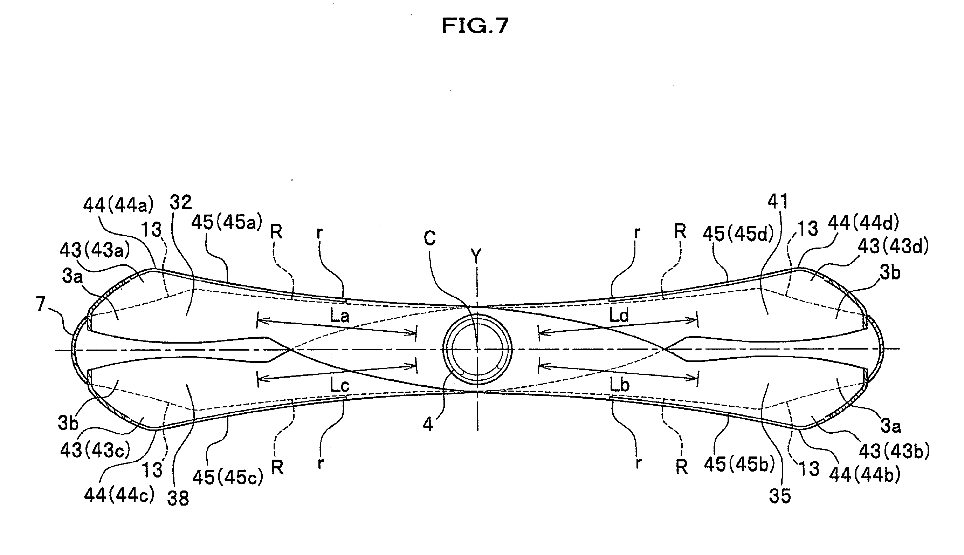

The blade part 3 has, as shown in FIGS. 4 and 7, a protrusion part 43 (43a-43d) protruded outside more than the outer ends 13, 13 of the sliding board 7. As shown in FIG. 6B and 6C, at an outer end 44b of the protrusion part 43b is provided a second edge 45b made of carbon steel. At the protrusion parts 43a, 43c, and 43d are similarly arranged second edges 45a, 45c, and 45d, respectively. As shown in FIG. 7, second side curves r formed at an outer end 44 (44a-44d) of the protrusion part 43 are smaller in radius (larger in curvature) than the first side curves R formed at the outer ends 13, 13 of the sliding board 7. As shown in FIG. 7, the blade part 3 comprises a rubbed part L (La-Ld) having a torsion in each longitudinal direction of the left-foot front-side contact part 32, the right-foot rear-side contact part 35, the left-foot rear-side contact part 38, and the right-foot front-side contact part 41 from the center portion C of the sliding board 7.

In addition, the blade part 3 and the upper surface of the sliding board 7 contact, as shown in FIGS. 1 and 6A, in the left-foot front-side contact part 32, the right-foot rear-side contact part 35, the left-foot rear-side contact part 38, and the right-foot front-side contact part 41. Because the blade part 3 contacts only the upper surface of the sliding board 7, it is possible to slide on the upper surface thereof.

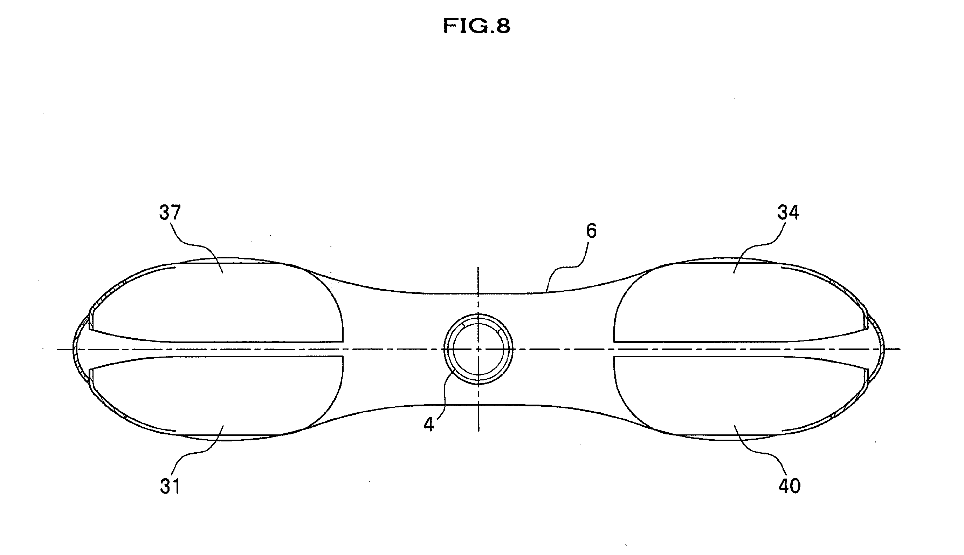

Furthermore, as shown in FIG. 8, the left-foot front-side fixation part 31, the right-foot rear-side fixation part 34, the left-foot rear-side fixation part 37, and the right-foot front-side fixation part 40 are fixed to the lower surface of the upper board 6.

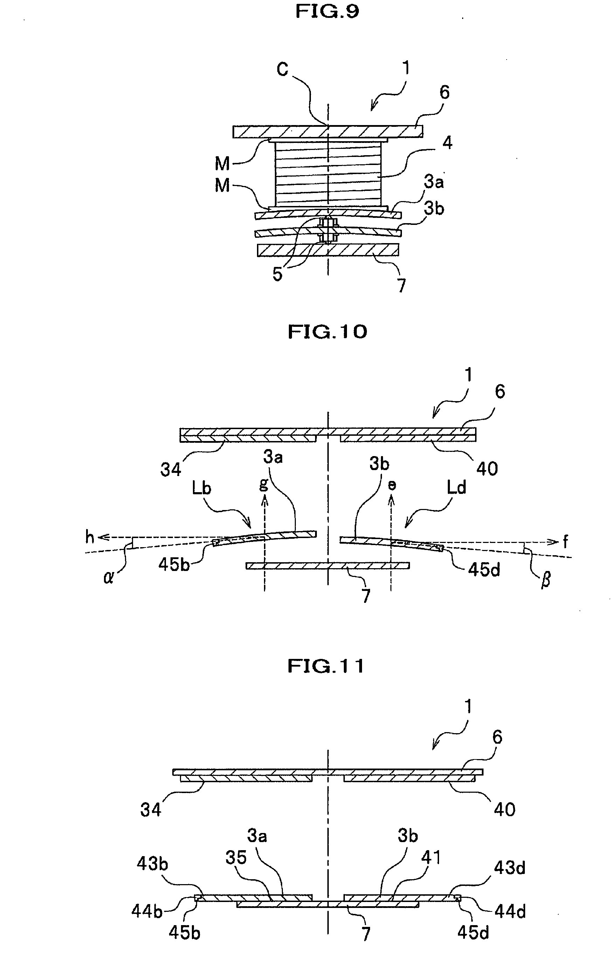

In an intersection portion of the blade part 3, as shown in FIG. 9, the upper layer blade 3a, the lower layer blade 3b, the upper board 6, and the sliding board 7 are stacked substantially in parallel. Sections of the upper layer blade 3a and the lower layer blade 3b are slightly curved downward. These curves are for the blade part 3 easily biting into a sliding surface and are not necessarily provided.

As shown in FIG. 10, the upper layer blade 3a and the lower layer blade 3b have torsion angles α, β so as to present a substantial chevron at the rubbed parts Ld and Lb (see FIG. 7). That is, the upper layer blade 3a is twisted at a predetermined angle counterclockwise from a horizontal axis h in a center of the blade 3a. On one hand, the lower layer blade 3b is twisted at a predetermined angle clockwise from a horizontal axis f in a center of the blade 3b. In addition, also at the intermediate parts La and Lc, the upper layer blade 3a and the lower layer blade 3b similarly have torsion angles.

As shown in FIG. 9, a torsion angle is 0° in the center portion C. Furthermore, as shown in FIG. 11, a torsion angle is 0° in the contact parts 35, 41 (similar also in the contact parts 32, 38). That is, the rubbed parts La-Ld (see FIG. 7) are provided at approximate intermediacy from the center portion C to the contact parts 32, 35, 38, and 41 so that the torsion angles α, β become maximum. Furthermore, the torsion angle α relating to the upper layer blade 3a is formed to be larger than the torsion angle β relating to the lower layer blade 3b. This is due to rubbed distances being long because the upper layer blade 3a is positioned upper than the lower layer blade 3b. The torsion angles α, β are preferably 0° < α < 45°, 0° < β < 45°.

As shown in FIG. 11, in the contact parts 35, 41 height positions of the outer ends 44b and 44d relating to the protrusion parts 43b, 43d are equivalent (similar also in the outer ends 44a and 44c of the contact parts 32, 38). That is, a distance from the second edge 45b of the outer end 44b to a sliding surface is equivalent to that from the second edge 45d of the outer end 44d to the sliding surface. Thus the player P can make a fair turn in left and right turns.

In addition, in the first embodiment, although the blade part 3 is arranged as described above, the invention is not limited thereto. For example, the rubbed part L may not also be provided. Furthermore, for example, at positions of the contact parts (32, 35, 38, and 41), the blade part 3 may also be provided with torsion angles (not shown).

The spring 4 is provided, as shown in FIG. 9, between the lower surface of the upper board 6 and an upper surface of the upper layer blade 3a in the center portion C of the body part 2. To upper and lower ends of the spring 4 are attached rubbers M in order to closely contact the spring 4 with the upper board 6 and the upper layer blade 3a. In the first embodiment a size of the spring 4 is about 8mm in diameter. In addition, the rubbers M may not also be used. Because a cushion property of the upper board 6 and the sliding board 7 is enhanced by providing the spring 4 between them, it is possible to flexibly respond to a vertical load received by them.

In addition, in the first embodiment, although the spring 4 is used as an elastic body between the upper board 6 and the sliding board 7, the invention is not limited thereto. For example, a publicly known elastic body (not shown) may also be used. A size, kind, and the like of the elastic body may be appropriately selected, considering a size and material of the boy part 2 and the weight, play style, and the like of the player P. Furthermore, in the first embodiment, although one spring 4 is used, the invention is not limited thereto; a plurality of springs 4 may also be used. Furthermore, a position of the spring 4 is also not limited.

As shown in FIG. 9, the support part 5 is a ball transfer where a spherical body is housed, and which makes the blade part 3 smoothly slide. In the first embodiment, for example, FREEBEAR C-8S manufactured by FREEBEAR Corporation is used for the support part. As shown in FIGS. 2A and 9, the support part 5 is provided at two places: between the lower surface of the upper layer blade 3a and the upper surface of the lower layer blade 3b; and between the lower surface of the lower layer blade 3b and the upper surface of the sliding board 7. One support part 5 is formed so that the spherical body housed contacts the lower surface of the upper layer blade 3a. The other support part 5 is formed so that the spherical body housed contacts the upper surface of the sliding board 7.

The blade part 3 slides along with a player P's weight movement as described later. Accordingly, by respectively providing the support parts 5 at the intersection portion of the upper layer blade 3a and the lower layer blade 3b and at that of the lower layer blade 3b and the sliding board 7, it is possible to make the blade part 3 smoothly slide.
In addition, in the first embodiment iron plates (not shown) are respectively installed at positions, which the spherical bodies of the support parts 5 contact and which are on the lower surface of the upper layer blade 3a and on the upper surface of the sliding board 7, in order to make the blade part 3 slide more smoothly. In the first embodiment, although the ball transfer is used for the support part 5, the invention is not limited thereto; a publicly known means for making plates, which contact with each other, smoothly slide may be used.

In addition, in the first embodiment, although carbon steel is used for the first edge 14 and the second edge 45, the invention is not limited thereto; another material may also be used.

### <Manufacturing Method>

Next will be described a manufacturing method of the play apparatus 1.
The body part 2 is composed of a carbon fiber reinforced plastic (CFRP) having a high strength and being rich in elasticity, and is formed integrally. As shown in FIG. 2C, the body part 2 (carbon fiber reinforced plastic sheets 51) in the first embodiment is cured after commercial prepreg is laminated in a tubular mold form with changing an orientation of fibers. With respect to the first embodiment, as the prepreg, for example, Besfight (registered trademark) [original fiber: HTA-12K, containing 37 mass % of an epoxy resin] manufactured by Toho Tenax can be cited.
Then as shown in FIGS. 2C and 2D, the sliding board 7 is formed by making a polyethylene sheet 52 adhere to a lower surface of the carbon fiber reinforced plastic sheet 51 with an epoxy resin adhesive. Then the first edges 14a, 14b made of carbon steel formed like a chevron are fitted in both ends of the polyethylene sheet 52, respectively, and are stuck by pressure to the carbon fiber reinforced plastic sheet 51 and the polyethylene sheet 52.

In addition, the material of the body part 2 is not limited to the carbon fiber reinforced plastic; for example, a glass fiber reinforced plastic (GFRP), acrylonitrile-butadiene-styrene (ABS), and the like are also available. Furthermore, the material of the body part 2 is not limited to a resin, and a wood, a metal, and the like are also available. A material light in weight and excellent in durability, elasticity, and strength is preferable.
Furthermore, in the first embodiment, although the body part 2 is integrally formed, the invention is not limited thereto; for example, after the upper board 6, the sliding board 7, the nose plate 8, and the tail plate 9 are individually formed, and respective boards and plates may also be joined.
Furthermore, the body part 2 may also be manufactured as a so called sandwich structure by using two carbon fiber reinforced plastic sheets 51, 51 and providing any of a wooden sheet, a polyurethane foam, and the like between the sheets 51, 51.

With respect to the blade part 3, as shown in FIGS. 6A, 6B, and 6C, both ends of the long carbon fiber reinforced plastic sheets 51, where the fixation parts (31, 34, 37, and 40) and the protrusion part 43 are formed, are curved, and the blade part 3 is fixed to the lower surface of the upper board 6 with an epoxy resin adhesive. Specifically, approximate centers of the upper layer blade 3a and the lower layer blade 3b are intersected; the left-foot front-side fixation part 31 and the right-foot rear-side fixation part 34, and the left-foot rear-side fixation part 37 and the right-foot front-side fixation part 40 are fixed to the lower surface of the upper board 6 (see FIG. 8). Then at the outer end 44 (44a-44d) is arranged the second edge 45 (45a-45d). In addition, the centers of the upper layer blade 3a and the lower layer blade 3b are preferably superimposed on the center portion C of the body part 2 (see FIG. 7).

In addition, in the first embodiment, although a carbon fiber reinforced plastic is used for the blade part 3, the invention is not limited thereto; for example, a glass fiber reinforced plastic (GFRP), acrylonitrile-butadiene-styrene (ABS), and the like are also available. Furthermore, the material of the blade part 3 is not limited to a resin, and a wood, a metal and the like are also available. The material of the blade part 3 is preferably light in weight and excellent in durability, elasticity, and strength. Furthermore, the body part 2 and the blade part 3 may also be different in their material.

Then, the support parts 5, 5 are provided between the upper layer blade 3a and the lower layer blade 3b, and between the lower layer blade 3b and the sliding board 7 (see FIG. 2A). Furthermore, the iron plates are embedded in the lower surface of the upper layer blade 3a and the upper surface of the sliding board 7, wherein the spherical body of each support part 5 contacts one of the lower surface and the upper surface. In addition, centers of the spring 4 and the support part 5 preferably are superimposed on the center portion C of the body part 2. In addition, in the first embodiment, although the lower surface of the upper layer blade 3a and the upper surface of the sliding board 7 are made to abut (see FIG. 9), the invention is not limited thereto.

Then the spring 4 is provided between the upper board 6 and the upper layer blade 3a. In the first embodiment, the upper end of the spring 4 and the lower surface of the upper board 6, and the lower end of the spring 4 and the upper surface of the upper layer blade 3a are fixed with an epoxy resin adhesive, respectively. In addition, the spring 4 is not necessarily fixed and may also simply abut with the lower surface of the upper board 6 and the upper surface of the upper layer blade 3a by utilizing the elasticity of the spring 4.

Furthermore, in the first embodiment, although an epoxy resin adhesive is used in the fixation method of the blade part 3 to the upper board 6, the invention is not limited thereto. Another adhesive may also be used, and a fastening device (not shown) such as a screw may also be used and the both may also be fixed. The fastening device and the adhesive may be used together and fix the both.

As shown in FIGS. 1 to 4, a length in the longitudinal direction of the play apparatus 1 relating to the first embodiment is about 150cm, and a length from the lower surface of the sliding board 7 to the upper surface of the upper board 6 is about 20cm. A thickness of the body part 2 is about 1.5cm. A width of the upper board 6 is about 35cm in maximum, and a width of portion of the constriction K is 25cm. A width of the sliding board 7 is 22cm. As shown in FIG. 4, the radius of the first side curves R of the sliding board 7 is about 8.8m (see FIG. 4), and the radius of the second side curves r of the blade part 3 is about 8.2m. In addition, in the first embodiment, although the first side curves R and the second side curves r are formed of arcs, respectively, the invention is not limited thereto; the curves R and r may also be formed on the basis of quadratic curves and the like.
In addition, these sizes do not limit the invention.
Furthermore, the manufacturing method described above is absolutely an exemplification and does not limit the invention.

### <Operation Condition>

Next will be described an operation condition of the play apparatus 1. In addition, with respect to a description of the first embodiment, a case of sliding on a snow surface (skiing slope) will be described.
With respect to the play apparatus 1, the player P's feet are fixed to the foot fasteners T, T fixed to the upper board 6, and when the apparatus 1 faces a slant (sliding surface), the apparatus 1 slides on the sliding surface by her/his own weight. In the first embodiment the left foot is assumed to face a travelling direction of the sliding surface.
In addition, in a description of the first embodiment, assuming that a stationary state is a case where the player P's weight acts vertically on the sliding board 7, a term "compressed" means that a distance between the upper board 6 and the sliding board 7 (distance between the fixation part and the contact part) is shorter than the distance in the stationary state. Furthermore, a term "opened" means that a distance between the upper board 6 and the sliding board 7 (distance between the fixation part and the contact part) is longer than the distance in the stationary state.

### (Case of Sliding Straight)

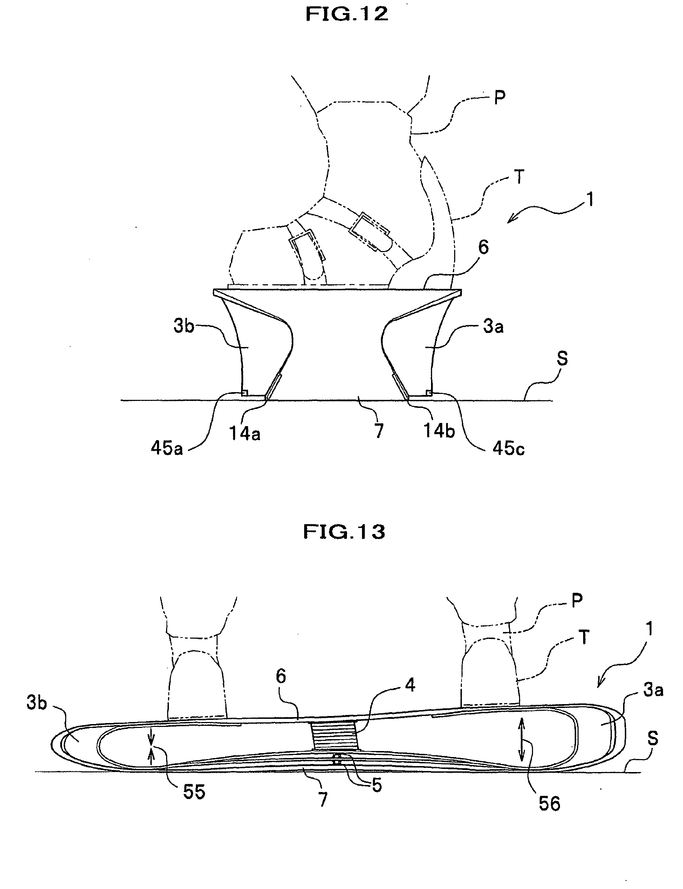

As shown in FIG. 12, the player P makes her/his weight act vertically on the sliding board 7 and thereby can slide straight. That is, when the player P's weight acts vertically on the sliding board 7, because the second edges 45a, 45c do not contact a sliding surface S, a substantially whole surface of lower surface of the sliding board 7 contacts the sliding surface S and she/he can slide straight.
In addition, as shown in FIG. 13, when the player P moves her/his weight to her/his left foot along a travelling direction, because an interval between the upper board 6 and sliding board 7 of a left-foot side thereof is compressed (arrow mark 55), and an interval between the upper board 6 and the sliding board 7 of a right-foot side thereof is opened (arrow mark 56), she/he can smoothly move her/his weight.

### (Case of Making Turn)

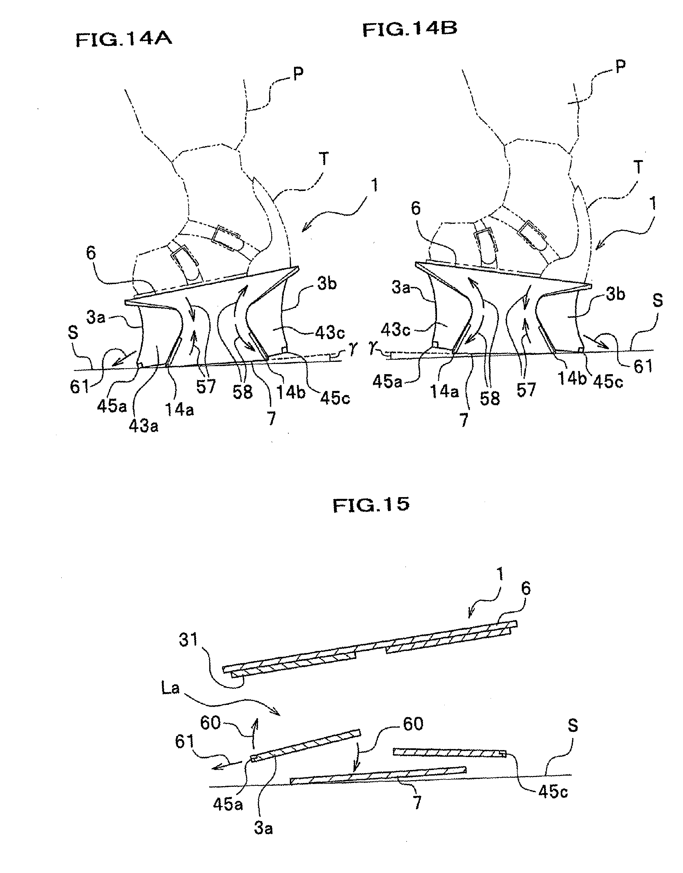

With respect to the play apparatus 1 relating to the first embodiment, as shown in FIGS. 14A and 14B, the player P moves her/his weight, makes any of the first edge 14 and the second edge 45 contact (bite into) the sliding surface S, and thereby makes a turn.

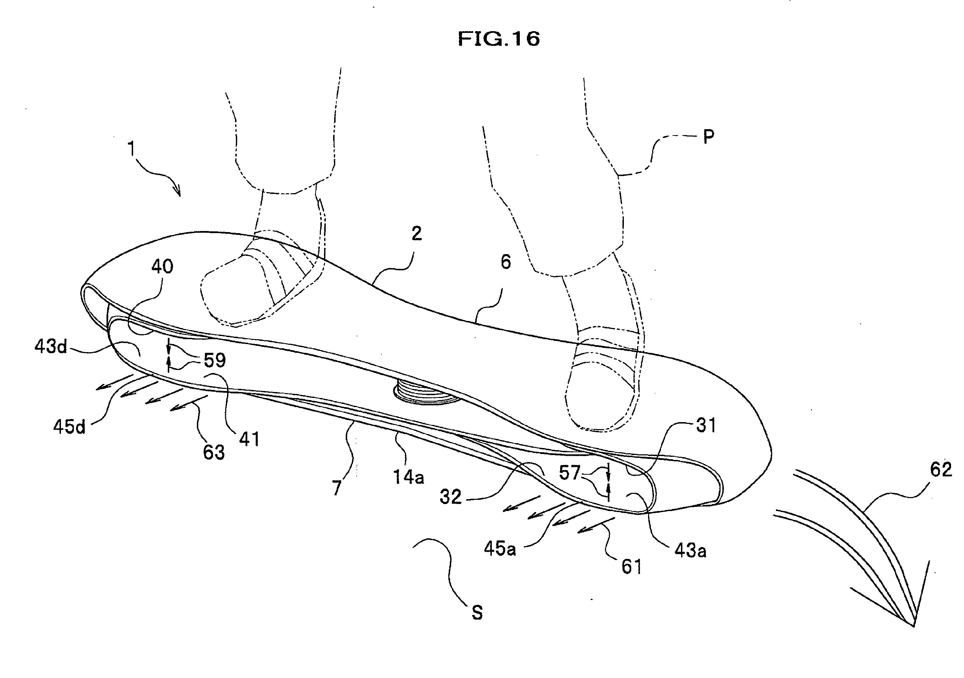

Here will be described a case of the player P making a right turn (arrow mark 62 direction in FIG. 16).
When the player P moves her/his weight to a left-foot front side (toe side), as shown in FIG. 14A, an interval between the upper board 6 and the sliding board 7 on the left-foot front side is compressed (arrow mark 57), and a rear side (ankle side) of the upper board 6 and the sliding board 7 is opened (arrow mark 58); the play apparatus 1 is wholly tilted by an angle γ, and the first edge 14a catches the sliding surface S.
Furthermore, at this time, because the protrusion part 43a of the upper layer blade 3a is pushed out in a player P's weight movement direction, the second edge 45a bites into the sliding surface S, and the player P can make a sharper turn.

That is, when the player P moves her/his weight to the left-foot front side (toe side), an interval between the left-foot front-side fixation part 31 and the left-foot front-side contact part 32 is compressed, and as its reaction, an interval between the right-foot rear-side fixation part 34 and the right-foot rear-side contact part 35 is opened (see FIG. 6A). At this time, although the left-foot front-side fixation part 31 and right-foot rear-side fixation part 34 of the upper layer blade 3a are fixed to the lower surface of the upper board 6, the left-foot front-side contact part 32 and the right-foot rear-side contact part 35 simply contact the upper surface of the sliding board 7; therefore, the protrusion part 43a slides along with the player P's weight movement.
Then, as shown in FIG. 15, when an interval between the left-foot front-side fixation part 31 and the left-foot front-side contact part 32 (see FIG. 6A) is compressed, the upper layer blade 3a turns in an arrow mark 60 direction by a torsion provided at the rubbed part La. With respect to the upper layer blade 3a, because both ends thereof are fixed at the left-foot front-side fixation part 31 and the right-foot rear-side fixation part 34, respectively, the protrusion part 43a slides with the upper surface of the sliding board 7 and is pushed out in a player P's weight movement direction (arrow mark 61). Thereby, as shown in FIG. 14A, the second edge 45a provided at the protrusion part 43a bites into the sliding surface S.

In addition, at this time, the upper layer blade 3a, the lower layer blade 3b, and the support parts 5, 5 slide toward the rear side (ankle side). That is, in a stationary state, as shown in FIG. 9, respective centers of the upper layer blade 3a, the lower layer blade 3b, and the support parts 5, 5 are substantially superimposed. However, the player P moves her/his weight, and thereby the upper layer blade 3a, the lower layer blade 3b, and the support parts 5, 5 slide so as to be pushed out toward the ankle side.

Furthermore, as shown in FIG. 16, when the player P moves her/his weight to a left-foot front side (toe side), a load is also applied to a right-foot toe side; therefore, an interval between the right-foot front-side fixation part 40 and the right-foot front-side contact part 41 is compressed (arrow mark 59). The player P's weight is absolutely applied to the left-foot front side, an interval between the left-foot front-side contact part 31 and the left-foot front-side fixation part 32 is compressed more than that between the right-foot front-side fixation part 40 and the right-foot front-side contact part 41. Because the protrusion part 43d slides along a player P's movement and is pushed out to the sliding surface S by an action substantially similar to the protrusion part 43a described above, the second edge 45d bites into the sliding surface S (arrow mark 63).

Thus the second edge 45a arranged at the protrusion part 43a, the first edge arranged at the sliding board 7, and the second edge 45d arranged at the protrusion part 43d catch the sliding surface S. Furthermore, because the second side curves r (see FIG. 7), whose radius is smaller than that of the first side curves R of the sliding board 7, are provided at the protrusion parts 43a, 43d having the second edges 45a, 45d, the player P can make a sharper turn.
Furthermore, because the protrusion parts 43a, 43d are pushed out in a sliding surface S direction along with a player P's weight movement, the parts 43a, 43d can continue to be contacted with the sliding surface S without being repelled by an impact of the sliding surface S while she/he makes a turn.
Furthermore, when the player P moves her/his weight (applies a large load) to the right-foot front side (toe side) while making a turn in the arrow mark 62 direction, because the edge 45d arranged at the protrusion part 43d farther bites into the sliding surface, she/he can make a sharp turn and brake.

In addition, when the player P wants to make a turn reversely compared to one described above, as shown in FIG. 14B, she/he may move her/his weight to a left-foot rear side (left-foot ankle side) and make the turn.
Furthermore, even if the player P moves her/his weight to the right-foot front side (toe side) and the right-foot rear side (ankle side), she/he can perform a similar operation.

Furthermore, because the player P can appropriately use any of the first edge 14 and the second edge 45 by adjusting the movement of her/his weight, she/he can make a turn rich in variety.

Furthermore, when the player P moves her/his weight to the left-foot front side (left-foot toe side), as shown in FIG. 14A, an interval between the upper board 6 and sliding board 7 of the front side is compressed (arrow mark 57), and at the same time, the upper board 6 and sliding board 7 of the left-foot rear side (ankle side) are opened (arrow mark 58). At this time, as shown in FIG. 6A, because the blades 3 are arranged to be the substantially X -shape in the plan view thereof, the interval between the left-foot front-side contact part 31 and the left-foot front-side fixation part 32 is compressed, and as its reaction, the interval between the right-foot rear-side fixation part 34 and the right-foot rear-side contact part 35 is opened; thereby, the player P can smoothly move her/his weight with respect to an oblique direction of a longitudinal direction axis.

According to the play apparatus 1 relating to the first embodiment, the body part 2 is formed to be a substantially tubular shape, and the sliding board 7 and the upper board 6 positioned over the board 7 are connected to the nose plate 8 and the tail plate 9; thereby, because the nose plate 8 and the tail plate 9 play a role of a cushion, it is possible to cushion an impact received by player P's feet. Furthermore, because the impact received by the player P's feet is cushioned, she/he can obtain sliding comfort and feel different from those conventionally obtained. Furthermore, because the blade part 3 (elastic mechanism) is provided inside the body part 2, it is possible to absorb the impact more.

Furthermore, with respect to the play apparatus 1, because the first side curves R are provided at the outer ends 13 of the sliding board 7, and thereby the first edge 14 can catch the sliding surface S along the curves R, the player P can make a smooth turn.

Furthermore, the blade part 3 comprises the protrusion part 43 having the second edge 45 positioned outside more than the first edge 14 provided at the outer ends 13 of the sliding board 7. When the player P moves her/his weight, the blade part 3 slides in her/his weight movement direction and the second edge 45 arranged at the protrusion part 43 catches the sliding surface S. Because the second side curves r, whose curvature is larger than that of the first side curves R, are arranged at the outer end 44 of the protrusion part 43, the player P can make a sharper turn.

Furthermore, with respect to the play apparatus 1, because two of the upper layer blade 3a and the lower layer blade 3b are provided obliquely with respect to the longitudinal direction axis X of the sliding board 7 so as to present the X-shape in a plan view thereof, for example, when the player P applies her/his weight to the left-foot front side (toe side), the interval between the left-foot front-side contact part 31 and the left-foot front-side fixation part 32 is compressed, and as its reaction, the interval between the right-foot rear-side fixation part 34 and the right-foot rear-side contact part 35 is opened; thereby, she/he can smoothly move her/his weight.

Furthermore, because the play apparatus 1 comprises the support parts 5, it is possible to reduce a friction generated between the sliding board 7 and the blade part 3 contacting with each other and to make the blade part 3 slide smoothly.

Furthermore, the play apparatus 1 comprises the spring 4 between the upper board 6 and the sliding board 7, and thereby their cushion properties are enhanced; therefore, it is possible to flexibly respond to a vertical load received by them.

Furthermore, because the width of the sliding board 7 is narrower than that of the upper board 6, a friction resistance against the sliding board 7 is small; therefore, because a sliding speed increases and a movable range of the player P's weight movement is small, she/he can easily make a turn.

Thus, although the first embodiment relating to the invention has been described with reference to the drawings, the invention is not limited thereto and can be appropriately changed within the spirit and scope thereof.

### <Second Embodiment>

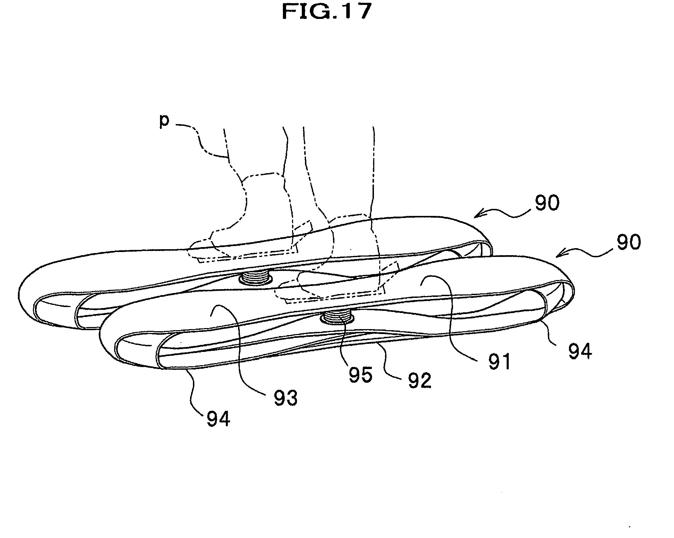

In the first embodiment, although the player P's feet are fixed to be substantially orthogonal to the longitudinal direction of the play apparatuses 1, 71, the invention is not limited thereto. For example, as shown in FIG. 17, the player P's feet may also be fixed to play apparatuses 90, 90, respectively. At this time, the player P's feet are fixed to be parallel to longitudinal directions of the play apparatus 1.
In the second embodiment, the play apparatus 90 comprises a body part 93 having an upper board 91 and a sliding board 92, blades 94, a spring 95, and a support part (not shown). Widths of the upper board 91 and the sliding board 92 are formed slightly wider than those of the player P's feet. A length of the play apparatus 90 in a longitudinal direction thereof is formed to be shorter than that of the play apparatus 1 described above, and is about 100cm. The player P's feet are fixed substantially over the spring 95.
In addition, because a manufacturing method and operation of the play apparatuses 90, 90 are substantially equivalent to those in the first embodiment, descriptions thereof will be omitted.

In addition, in the second embodiment, although the play apparatus 90 is formed as described above, the invention is not limited thereto; the length, width, and the like of the play apparatus 90 may be appropriately decided according to a player P's height and play style.

### <Third Embodiment>

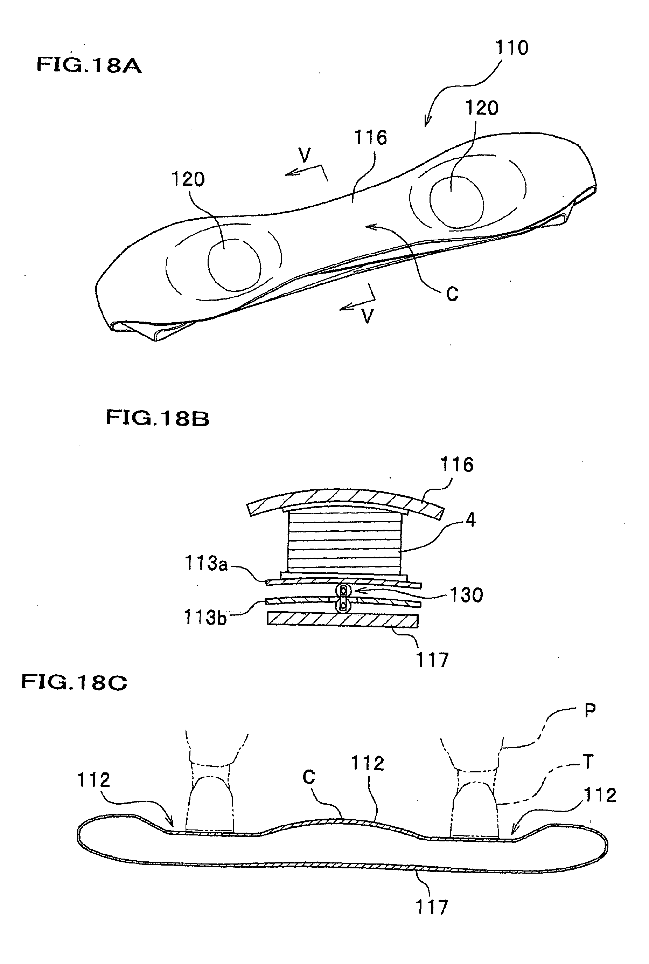

A play apparatus 110 relating to a third embodiment is different from the other embodiments, as shown in FIGS. 18A-18C, in a structure of an upper board 116 and that of a support part 130.
In the upper board 116 relating to the play apparatus 110, as shown in FIG. 18A and 18C, are formed depressions 120, 120 separated from the center portion C at a substantially equal interval. As shown in FIG. 18C, the depression 120 is formed by depressing a part of the upper board 116 toward a sliding board 117. A bottom face of the depression 120 is formed to be flat, and the player P's feet are fixed through the foot fasteners T.

Because height positions of the player P's feet can be lowered by thus providing the upper board 116 with the depressions 120, she/he easily gets on and off the play apparatus 110. Furthermore, because distances from the player P's feet to the sliding board 117 are short, it is easy to transmit a player P's weight movement to the sliding board 117, and she/he can slide more smoothly. In addition, as shown in FIG. 18B, both ends of the upper board 116 may also be formed to curve downward.

In addition, in the third embodiment, although a height position of the upper board 116 in the center portion C is configured to be higher than bottom faces of the depressions 120, the invention is not limited thereto. For example, it is also available to form one depression 120 so that the position of the center portion C is equivalent to that of bottom face of the depression 120. Furthermore, the shape of the depression 120 may also be another shape.

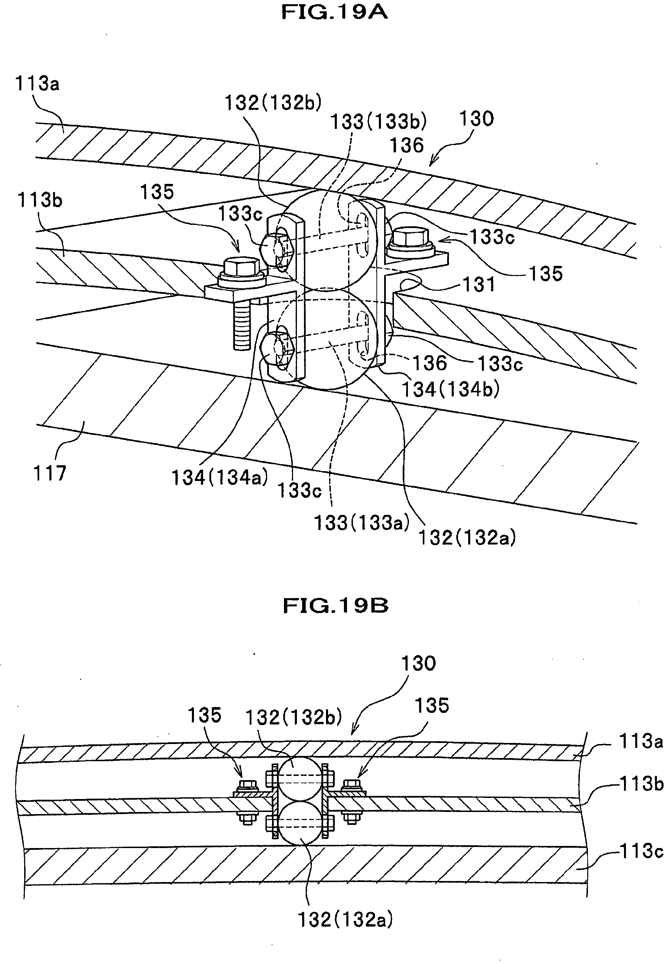

As shown in FIG. 18B and 19A, a support part 130 relating to the third embodiment penetrates a through hole 131 formed in a lower layer blade 113b and is installed between the sliding board 117 and an upper layer blade 113a.
The support part 130 comprises: a rotation body 132 installed in contact with an upside and downside thereof; a rotation shaft 133 inserted through the rotation body 132; a T-type fitting 134 through which the rotation shaft 133 is inserted; and joining parts 135 configured to join the T-type fitting 134 and the lower layer blade 113b.

The rotation body 132 consists of a first rotation body 132a positioned below and a second rotation body 132b positioned above; each is a spherical body made of a hard rubber having a same diameter. The first rotation body 132a is contacted at a lower end thereof with the sliding board 117 and at an upper end thereof with the second rotation body 132b. Furthermore, the second rotation body 132b is contacted at a lower end thereof with the first rotation body 132a and at an upper end thereof with the upper layer blade 113a.

The rotation shaft 133 consists of a first rotation shaft 133a and a second rotation shaft 133b respectively inserted in centers of the first rotation body 132a and the second rotation body 132b. Axial directions of the first rotation shaft 133a and the second rotation shaft 133b are parallel to a longitudinal direction of the play apparatus 110 and are formed to be horizontal. At both ends of the rotation shaft 133 are formed male threads, and the rotation shaft 133 is fastened by nuts 133c.

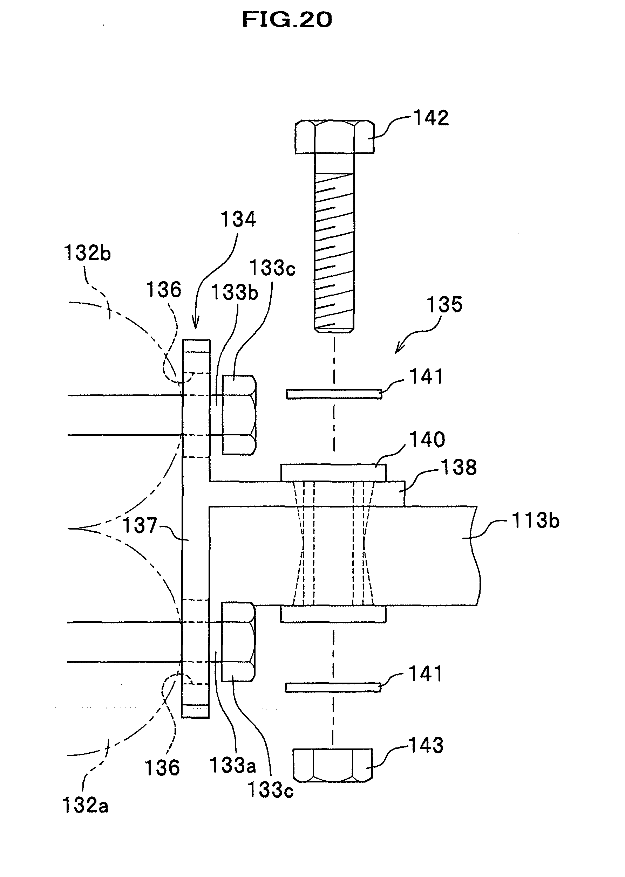

As shown in FIG. 19A, the T-type fitting 134 consists of a pair of a first T-type fitting 134a and a second T-type fitting 134b, rotatably supports the rotation body 132, and is joined to the lower layer blade 113b through the joining parts 135. The T-type fitting 134 comprises, as shown in FIG. 20, a base plate part 137 where elongated holes 136, 136 are bored, and an extension part 138 vertically formed from the base plate part 137. The elongated hole 136 presents an ellipse shape extended up and down in section view and is bored at two places in the base plate part 137. The elongated hole 136 is inserted through by the rotation shaft 133 and is formed so that the shaft 133 is movable up and down in the elongated hole 136. That is, a shaft diameter of the rotation shaft 133 is formed to be smaller than a hole width of the elongated hole 136, and the nuts 133c installed at both ends of the rotation shaft 133 are fastened at positions separated from the base plate part 137. The extension part 138 is extendedly provided in parallel to the longitudinal direction of the play apparatus 110 and is joined to the lower layer blade 113b by the joining parts 135.

The joining part 135 is, as shown in FIG. 20, a portion configured to join the T-type fitting 134 and the lower layer blade 113b. With respect to the joining part 135, an absorption material 140 is inserted through a communication hole configured to communicate with the extension part 138 and the lower layer blade 113b, and is fastened by a bolt 142 and a nut 143 through washers 141. The absorption material 140 presents a cylindrical shape having a hollow portion through which the bolt 142 is inserted, and is formed so that a middle portion of the material 140 is a constricted shape. That is, both end sides of the absorption material 140 are formed to be thicker in thickness than the middle portion. For example, a publicly known rubber bush is used for the absorption material 140. By using the absorption material 140, a load acting on the support part 130 is absorbed and a movement in the longitudinal direction is allowed. Furthermore, because the both end sides of the absorption material 140 are formed to be thicker in thickness than the middle portion thereof, it is possible to flexibly respond to the load acting on the support part 130.

According to the support part 130 thus described, when the player P moves her/his weight to any of front and rear directions (toe side or ankle side), because the first rotation body 132a and the second rotation body 132b turn around the rotation shaft 133 as their axis while contacting with each other, the upper layer blade 113a and the lower layer blade 113b smoothly slide in their width directions. Furthermore, because the absorption material 40 is inserted through, it absorbs a load acting on the support part 130 and allows the upper layer blade 113a and the lower layer blade 113b to move in their longitudinal directions. Thus by the player P's weight movement same as in the play apparatus 1 relating to the first embodiment, because it is possible to make a second edge of the upper layer blade 113a and the lower layer blade 113b bite into a sliding surface, she/he can make a sharp turn.

Here, if the rotation shaft 133 is fixed to the T-type fitting 134, the first rotation body 132a and the second rotation body 132b wear, and a gap is generated between them, and there is a possibility of their idling. However, in the third embodiment, because the elongated holes 136 are formed, the rotation shaft 133 moves up and down in the holes 136. Thereby, when player P's load acts on the upper board 116, because the first rotation body 132a and the second rotation body 132b always contact with each other, it is possible to prevent their idling.

In addition, in the third embodiment, although the support part 130 described above is used, another mode thereof is also available. Although the rotation body 132 is assumed to be, for example, a spherical body, for example, an elliptical sphere shape is also available. Furthermore, although a pair of fittings are used as the T-type fitting 134, they may be also integrally formed. Furthermore, the shape and material of the absorption material 140 may be appropriately set according to a player P's play style. Furthermore, in order to prevent the wear of the elongated holes 136 and the rotation shaft 133, cushion materials may also be provided along the inner shapes of the holes 136, respectively.

### <Fourth Embodiment>

Next will be described a fourth embodiment relating to the invention. The invention relating to the fourth embodiment is different from the first embodiment in that a player sits on an upper board and uses it as a sleigh.

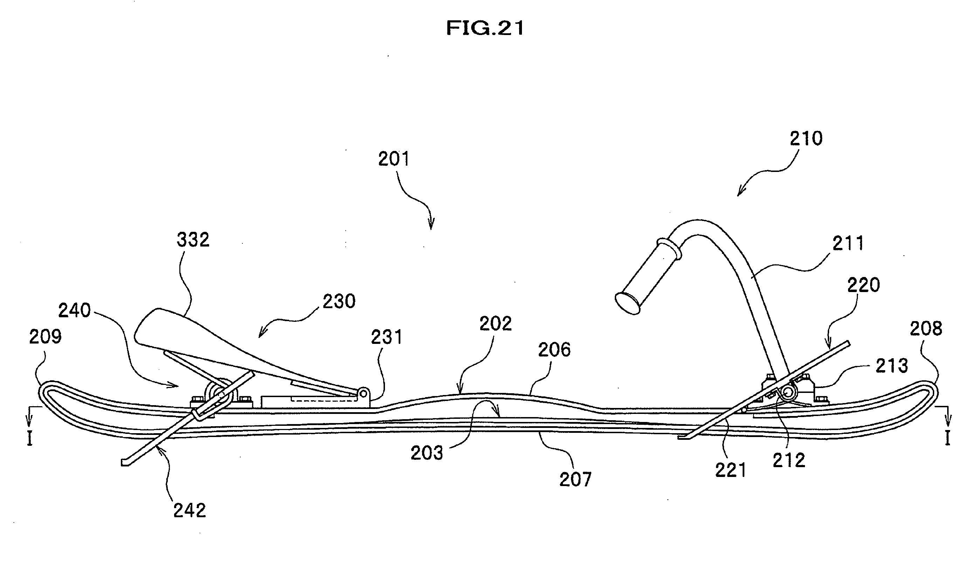

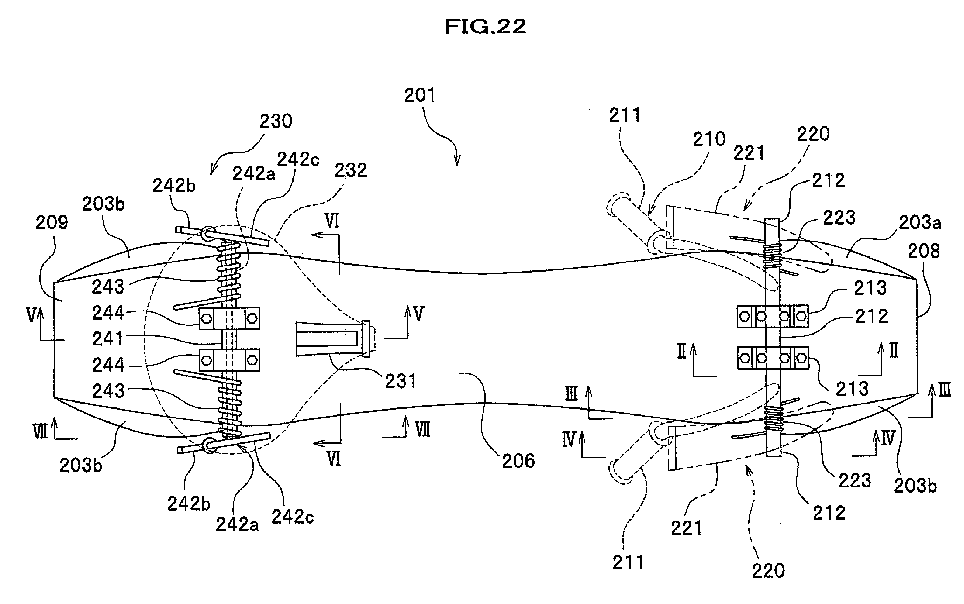

FIG. 21 is a side view showing a play apparatus relating to the fourth embodiment. FIG. 22 is a plan view showing the play apparatus relating to the fourth embodiment. As shown in FIGS. 21 and 22, a play apparatus 201 relating to the fourth embodiment comprises: a body part 202 presenting a substantially an elliptical-tubular shape in a side view thereof; a blade part 203 provided inside the body part 202; a handle mechanism unit 210 provided on a nose plate 208 side of the body part 202; a pair of brake parts 220 provided on both sides of the handle mechanism unit 210; a seat mechanism unit 230 provided on a tail plate 209 side of the body part 202; and a slide prevention mechanism unit 240 provided below the seat mechanism unit 230. With respect to the play apparatus 201, because configurations of the body part 202 and the blade part 203 are substantially equivalent to those in the first embodiment, they will be simply described.

The body part 202 comprises an upper board 206 configured to be sat by a player, an lower board 207 configured to be contacted with a sliding surface, the nose plate 208 configured to connect one end of the upper board 206 and one end of the lower board 207, and the tail plate 9 configured to connect the other end of the upper board 206 and the other end of the lower board 207. As shown in FIG. 22, the body part 202 is formed symmetrically with respect to a longitudinal direction axis.

The upper board 206, where the handle mechanism unit 210, the seat mechanism unit 230, and the like described later are provided, is a sheet material and is curvedly formed so that a middle portion thereof is protruded upward. The upper board 206 is constricted in a middle portion thereof in a plan view thereof, and a top end side and rear end side thereof are formed to be tapered.

The lower board 207 is formed to be narrower in width than the upper board 206. An upper surface of the lower board 207 is in contact with the blade part 203 described later. In a middle portion of the lower board 207 is provided a chamber curved upward. At outer ends in a width direction of the lower board 207 is formed a first edge made of, for example, carbon steel. Furthermore, at the outer ends in the width direction of the lower board 207 is formed a first side curve whose curvature is comparatively small (for example, side curve radius 8.8m).

As shown in FIG. 21, the nose plate 208 connects front sides in a travelling-direction of the upper board 206 and the lower board 207; the tail plate 209 connects rear sides in the travelling-direction of the upper board 206 and the lower board 207. The nose plate 208 and the tail plate 209 are curvedly formed so as to be projected from the above mentioned front sides and rear sides, respectively.

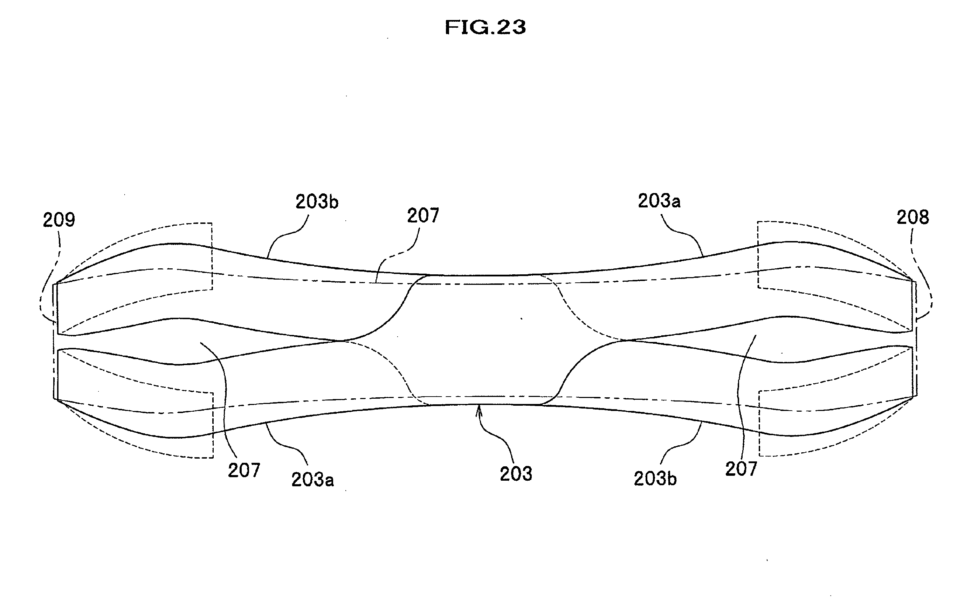

FIG. 23 is a I-I section view of FIG. 21. As shown in FIG. 23, the blade part 203 presents a substantially X-shape in a plan view thereof, and consists of an upper layer blade 203a positioned on an upper side, and a lower layer blade 203b positioned on a lower side. The upper layer blade 203a and the lower layer blade 203b are formed by folding both ends of sheet-like members so that upper portions thereof are opened. As shown in FIG. 23, the upper layer blade 203a is provided from a front left side to a rear right side in a travelling direction; the lower layer blade 203b is provided from a front right side to a rear left side in the travelling direction. Because a configuration, and action and effect of the blade part 203 are substantially equivalent to those of the blade part 3 relating to the first embodiment, descriptions thereof will be omitted.

The handle mechanism unit 210 is a portion gripped by a player and for facilitating a player's weight movement. The handle mechanism unit 210 is vertically provided from the upper board 206, and comprises a pair of handle parts 211 gripped by her/him, a base shaft part 212 configured to connect the pair of the handle parts 211 with each other in middle, and fixation fittings 213 configured to attach the base shaft part 212 to the upper board 206.

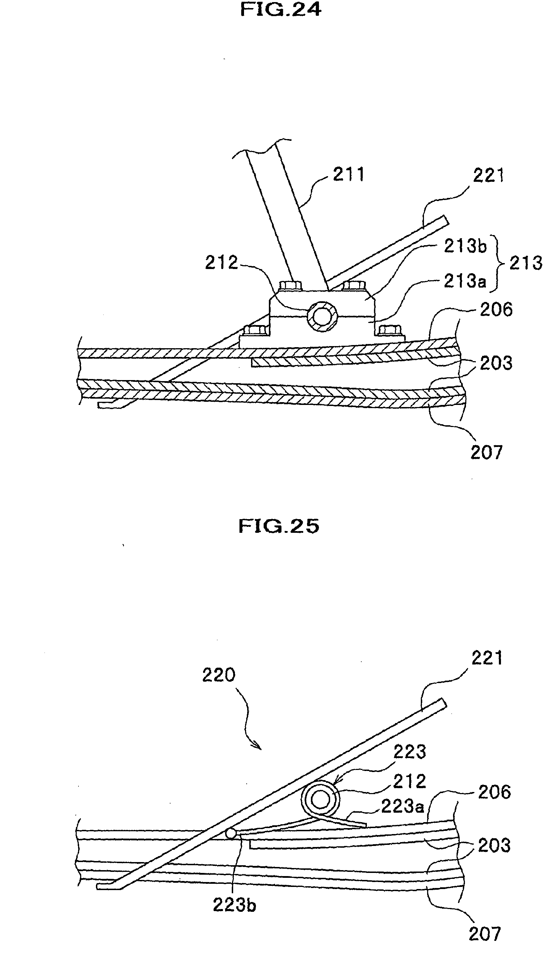

The handle parts 211 are vertically provided from the base shaft part 212 toward an oblique rear in the travelling direction. In the embodiment the handle parts 211 are formed integrally with the base shaft part 212. Portions gripped by a player out of the handle parts 211 are extendedly provided downward. The base shaft part 212 is a bar member extended in a width direction of the upper board 206, and is projected outward from outer edges of the upper board 206.
The base shaft part 212 is, as shown in FIG. 24, sandwiched and fixed between a lower side fixation fitting 213a attached to the upper board 206 and an upper side fixation fitting 213b attached to an upper portion of the fixation fitting 213a. The upper portion of the lower side fixation fitting 213a and a lower portion of the upper side fixation fitting 213b are cut out like arcs, respectively, along a periphery of the base shaft part 212, and pinch it without a gap. The upper board 206 and the lower side fixation fitting 213a are attached through bolts. Furthermore, the lower side fixation fitting 213a and the upper side fixation fitting 213b are attached through bolts.

In addition, out of periphery of the base shaft part 212, on a portion of the periphery where it contacts the fixation fitting 213 is provided a minute protrusion strip (not shown). Thereby, only when a predetermined force acts on any of the handle parts 211, they are formed to be movable around the base shaft part 212.

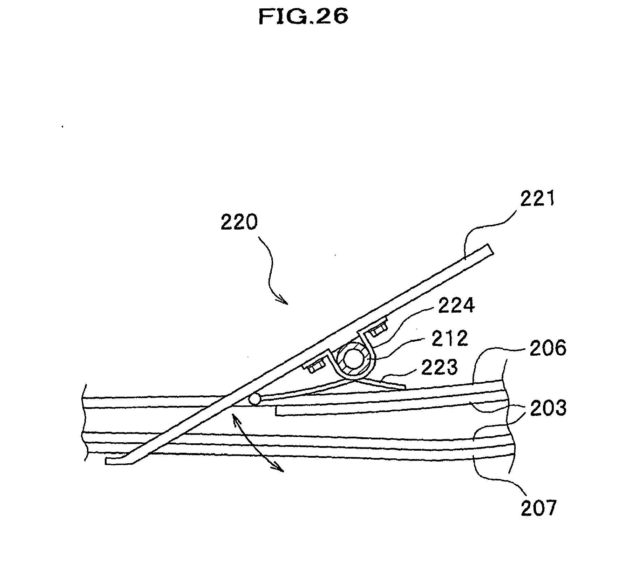

The brake parts 220 are, as shown in FIGS. 25 and 26, attached to both left and right sides of the upper board 206, respectively, and stop the play apparatus 201 which is sliding. The brake part 220 comprises a push plate 221 attached to be rotatable around the base shaft part 212, a coil spring 223 wound around the shaft part 212, and a bracket 224 configured to connect the shaft part 212 and the push plate 221.

The push plate 221 is a sheet material where a player's foot is put, a lower end of the push plate 221 contacts a sliding surface, and thereby promotes braking of the play apparatus 201. The push plates 221 are, as shown in FIG. 22, formed so that upper end sides (top end sides) thereof depict arcs in middle directions of the upper board 206, respectively. As shown in FIG. 26, the push plate 221 is tilted rearward, and a lower end of the push plate 221 and the lower board 207 are formed to be at substantially equivalent height positions. The push plate 221 is rotatably attached within a range of a predetermined angle in the circumferential direction of the base shaft part 212.

The coil spring 223 is, as shown in FIG. 25, wound around a circumference of the base shaft part 212. One end 223a of the coil spring 223 is configured to abut with the upper board 206, and the other end 223b is configured to abut with a reverse side of the push plate 221. Accordingly, a force always acts on the push plate 221 in a clockwise direction around the base shaft part 212.
As shown in FIG. 26, the bracket 224 is inserted through the base shaft part 212 and is a member configured to connect the shaft part 212 and the push plate 221. The bracket 224 is attached to the push plate 221 through bolts.

Next will be described an operation of the brake parts 220. A player pushes her/his foot against the push plate 221, tilts it in a sliding surface direction, and contacts the lower end of the push plate 221 with the sliding surface; thereby it is possible to decelerate or stop the play apparatus 201. Furthermore, when the player separates her/his foot from the push plate 221 (reduces the push pressure), its lower end is pushed down by a reaction force of the coil spring 223; therefore, the lower end is removed from the sliding surface, and she/he can release the brake part 220.
When an external force does not act on the push plate 221, a counterclockwise force acts on it around the base shaft 212 by a torsion reaction force of the coil spring 223; therefore, a top end (upper end) of the base plate 221 is configured to abut with the upper surface of the upper board 206.

In addition, although the brake parts 220 are formed as described above, another mode thereof is also available. For example, instead of the coil springs 223, leaf springs and other elastic members may also be used. Furthermore, the brake parts 220 may not always be provided.

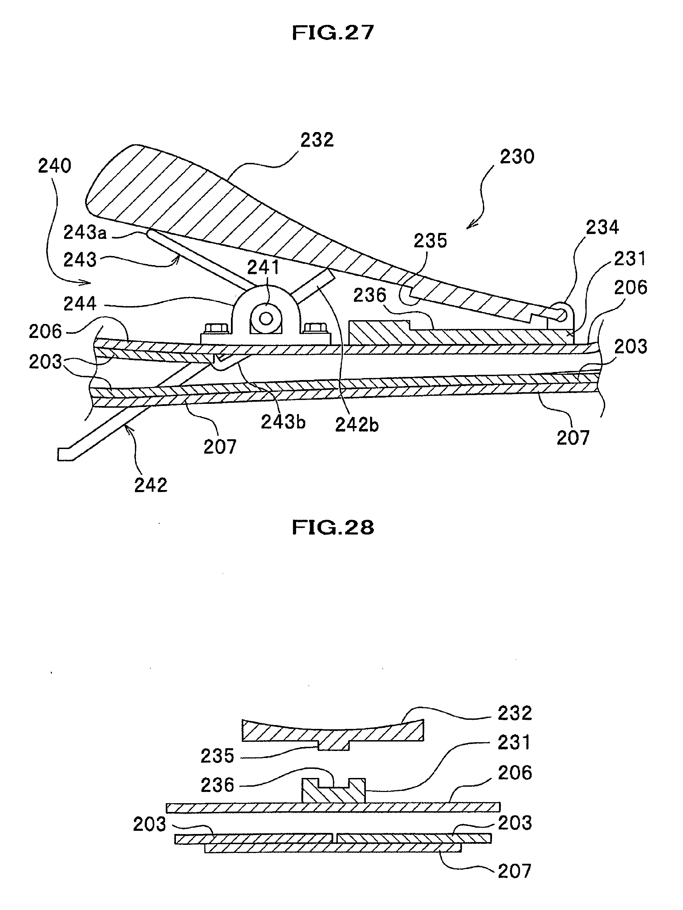

As shown in FIG. 27, the seat mechanism unit 230 is a portion configured to be sat by a player. The seat mechanism unit 230 comprises a base part 231 installed on the upper board 206, a seat part 232 provided above the base part 231, and a hinge part 234 configured to connect the base part 231 and the seat part 232 by a pin joining. The seat part 232 is formed to be rotatable around the hinge part 234.

With respect to the seat part 232 shown in FIG. 22, its nose plate 208 side is formed to be tapered and its tail plate 209 side is formed to be widened; thereby a human buttock is adapted to suitably fit the seat part 232. Under the seat part 232, along a longitudinal direction of the upper board 206 is formed a protrusion strip 235 protruded downward.
The base part 231 is a member configured to support the seat part 232, and a depression part 236 is cut out of upper surface of the base part 231 along the longitudinal direction of the upper board 206. That is, as shown in FIG. 28, the protrusion strip 235 of the seat part 232 and the depression part 236 of the base part 231 are engaged without a gap, and thereby a swing in a left to right direction with respect to a travelling direction is prevented; therefore, a player can stably sit.

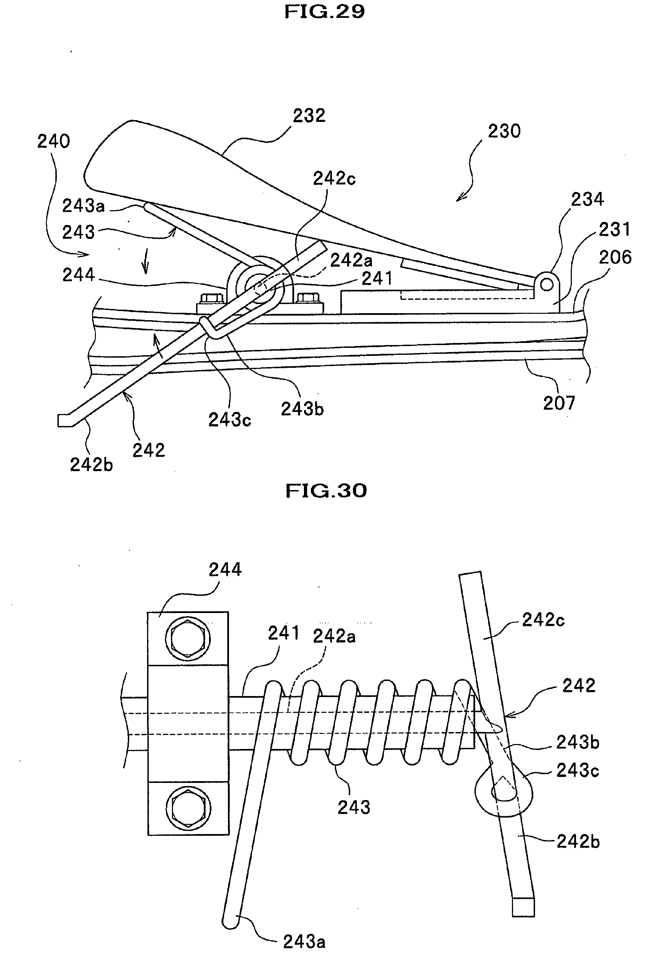

The slide prevention mechanism unit 240 is, as shown in FIG. 29, installed below the seat mechanism unit 230, and is directed so that the play apparatus 201 slides a slant without a player getting on it. The slide prevention mechanism unit 240 comprises a hollow pipe 241 configured to be extendedly provided in a width direction of the upper board 206, a stopper part 242 configured to be inserted in the hollow pipe 241 and to be contacted with a sliding surface, and a coil spring 243 configured to be wound around a periphery of the hollow pipe 241.

As shown in FIG. 22, the hollow pipe 241 is extendedly provided below the seat part 232 in the width direction of the upper board 206 and is attached to the upper board 206 by the brackets 244. As shown in FIGS. 29 and 30, the stopper part 242 comprises a shaft part 242a configured to be inserted through the hollow pipe 241, a contact part 242b configured to be extendedly provided from both ends of the shaft part 242a to a sliding surface, and an abutting part 242c configured to be extendedly provided from both ends of the shaft part 242a to the seat part 232, and the stopper part 242 is integrally formed.

The contact part 242b is, as shown in FIG. 29, a bar-like member provided extendedly from the shaft part 242a and is formed to be tilted from the shaft part 242a to a rear side in a travelling direction. A length of the contact part 242b is formed to be larger than a distance from the shaft part 242a to a sliding surface. A top end (upper end) of the abutting part 242c is configured to abut with a reverse side of the seat part 232.
In addition, in the embodiment, as shown in FIG. 22, although the contact parts 242b are formed at both ends of the shaft part 242a, respectively, they may also be provided at either side.

The coil spring 243 is, as shown in FIGS. 29 and 30, wound around a periphery of the hollow pipe 241. One end 243a of the coil spring 243 is configured to abut with the reverse side of the seat part 232; the other end 243b holds the contact part 242b. To the other end 243b of the coil spring 243 is attached a hold fitting 243c formed like a ring, and the contact part 242b is inserted through the hold fitting 243c.

The coil spring 243 is, in a side view thereof from an outside of the play apparatus 201 as shown in FIG. 29, wound in a clockwise direction around the periphery of the hollow pipe 241 from the one end 243a to the other end 243b of the spring 243. Thereby, on the one end 243a of the coil spring 243 acts a clockwise force around the shaft part 242a. Furthermore, on the other end 243b of the coil spring 243 acts a counterclockwise force around the shaft part 242a. Accordingly, when an external force does not act (when a player does not sit on the seat part 232), the contact part 242b always contacts a sliding surface; therefore, it is possible to prevent the play apparatus 201 from sliding.

On one hand, when a player sit on the seat part 232, it is pushed down and the abutting part 242c turns around the shaft part 242a in a clockwise direction. Thereby, the contact part 242b is separated from a sliding surface. Thus, according to the slide prevention mechanism unit 240, only if a player sits on the seat part 232, she/he can automatically release a slide prevention function and slide.

Furthermore, in the embodiment, although the slide prevention mechanism unit 240 is formed as described above, the invention is not limited thereto; another mode thereof is also available.

According to the fourth embodiment thus described, it is also possible to sit on the upper board 206 as in a sleigh and to perform operations. At this time, a player's buttock is suitably housed in the seat part 232, and she/he can keep a stable posture by gripping the handle parts 211. Thereby, because a player can easily move her/his weight, it is possible to enhance the operability of the play apparatus. Furthermore, because the play apparatus 201 comprises the blade part 203 consisting of a configuration substantially equivalent to that of the blade part 3 relating to the first embodiment, the play apparatus 201 cushions an impact from a sliding surface to a player, and the upper layer blade 203a and the lower layer blade 203b catch a sliding surface by a player's weight movement; thus she/he can make a sharper turn.

Furthermore, because the play apparatus 201 comprises the brake parts 220, it is possible to suitably brake the play apparatus 201. Furthermore, because the play apparatus 201 comprises the slide prevention mechanism unit 240, it is possible to prevent the play apparatus 201 from sliding without a player getting on it.

### <Fifth Embodiment>

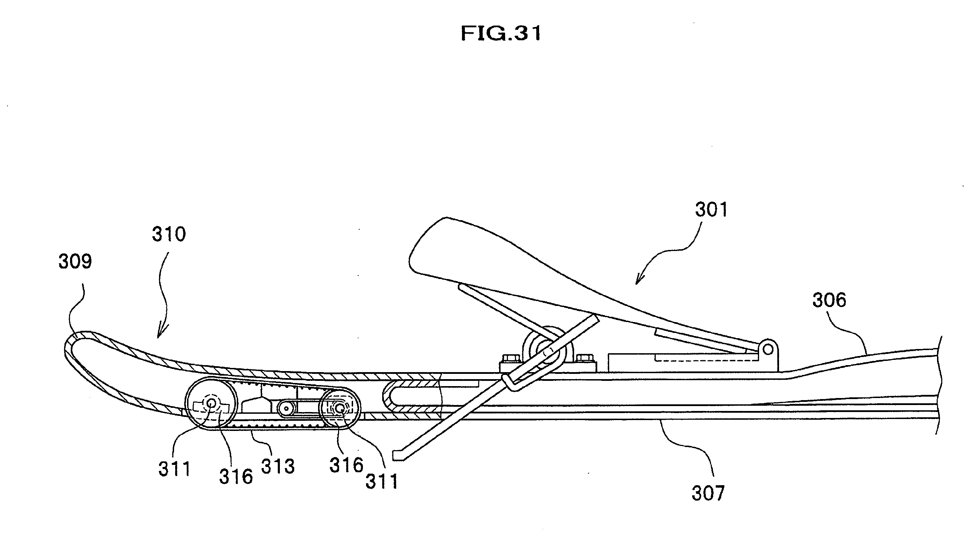

Next will be described a fifth embodiment relating to the invention. FIG. 31 is a partially exploded side view showing a rear side in a travelling direction of a play apparatus relating to the fifth embodiment. A play apparatus 301 relating to the fifth embodiment is different from the other embodiments in comprising a drive mechanism unit 310 having caterpillars configured to be contacted with a sliding surface. Because configurations other than the drive mechanism unit 310 are substantially equivalent to those of the fourth embodiment, duplicate descriptions thereof will be omitted.

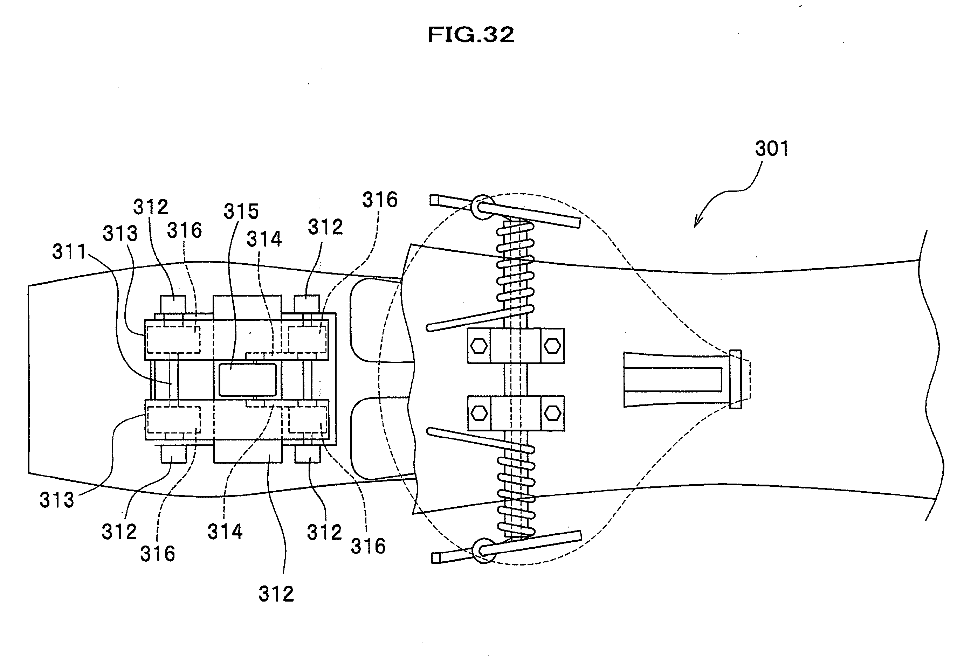

The drive mechanism unit 310 is installed at a rear in the travelling direction of the play apparatus 301 and makes it travel by itself. The drive mechanism unit 310 comprises, as shown in FIGS. 31 and 32, a pair of shafts 311 configured to be attached to a lower board 307 through brackets 312, drive wheels 316 configured to be provided at a predetermined interval in a longitudinal direction of the shafts 311, respectively, caterpillars 313 configured to be provided around the drive wheels 316, and a drive unit 315 configured to be connected to the shafts 311 through chains 314.

The shafts 311 are arranged in parallel separately in the lower board 307, and each shaft 311 is installed through a pair of brackets 312. The drive wheels 316 are provided separately at the shafts 311 by each two in a width direction of the lower board 307, and turn integrally with the shafts 311. A pair of the caterpillars 313, 313 are provided separately in the width direction of the lower board 307, and are hung across a pair of the drive wheels 316, 316 separated in a front-and-rear direction thereof. In a lower surface of the lower board 307 is partially bored a hole, and lower surfaces of the caterpillars 313 are formed to be contacted with a sliding surface. The drive unit 315 consists, for example, of an engine whose fuel is gasoline, and is connected to the shafts 311 through the chains 314. Because the drive mechanism unit 310 is thus formed, the caterpillars 313 rotating forth or back catch the sliding surface, and can make the play apparatus 301 travel by itself, not depending on a slant of the sliding surface.

In addition, although the drive mechanism unit 310 has been described in a case of using the invention as a sleigh, it is possible to use the unit 310 also in cases of using the invention as a snowboard of the first embodiment and using the invention as a ski of the second embodiment.

### <Sixth Embodiment>

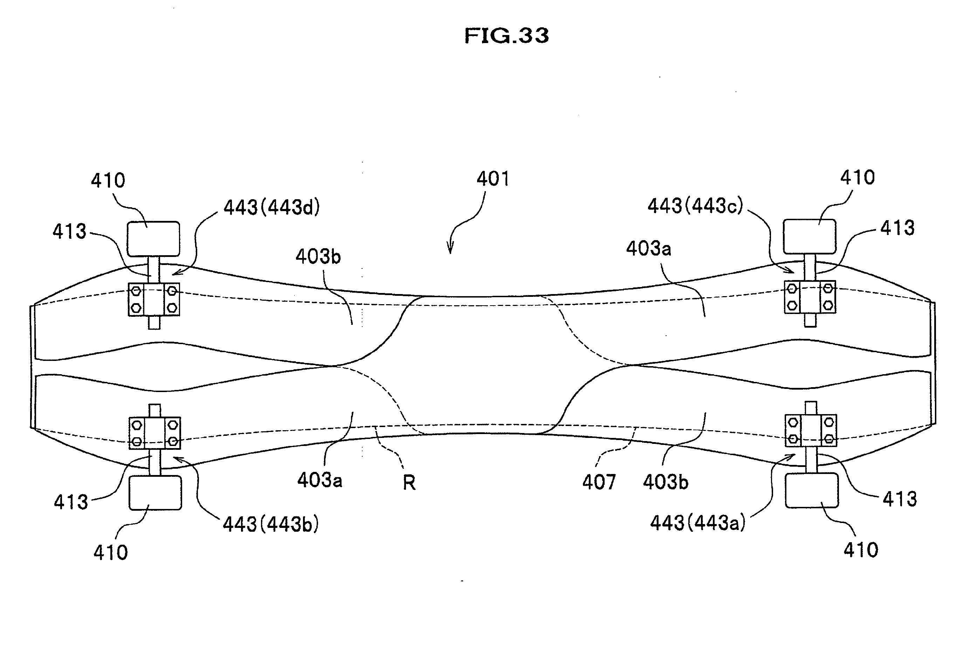

Next will be described a sixth embodiment relating to the invention. FIG. 33 is a partially exploded plan view showing a play apparatus relating to the sixth embodiment. A play apparatus 401 relating to the sixth embodiment comprises tyres in addition to the configuration of the play apparatus 201 relating to the fourth embodiment. That is, tyres 410, 410, 410, 410 are provided at fronts and rears of blade part 403 of the play apparatus 401 relating to the sixth embodiment.

The tyres 410 are, as shown in FIG. 33, provided at each protrusion part 443 out of an upper layer blade 403a and a lower layer blade 403b which the part 443 is configured to be protruded outside more than a lower board 407. With respect to attached portions of the tyres 410, because any portion thereof is substantially equivalent, the tyre 410 on a front-right side in a travelling direction will be described as an example.

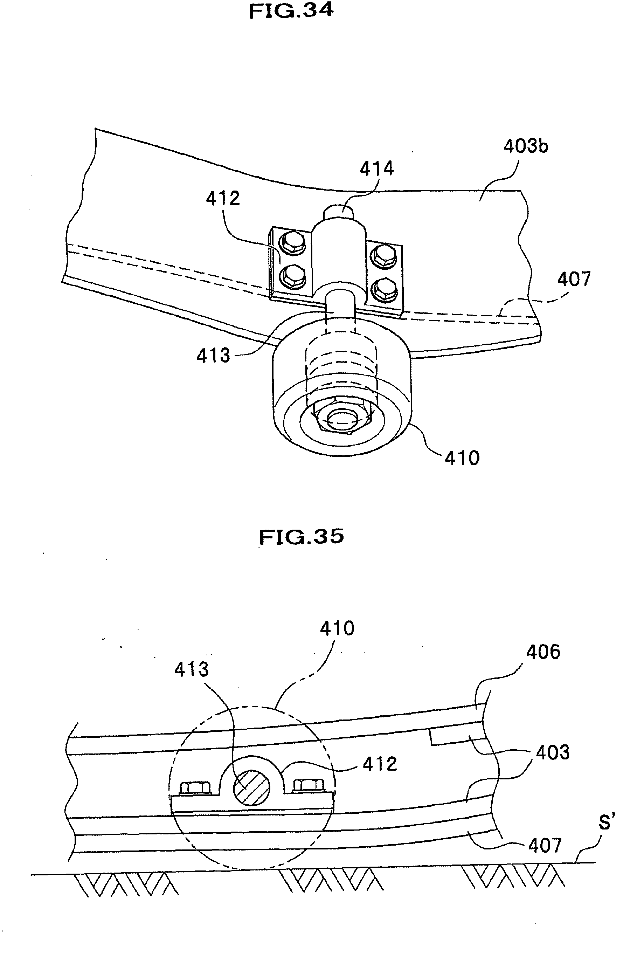

The tyre 410 is, as shown in FIG. 34 and 35, attached rotatably to a shaft 413 fixed by a bracket 412. A side of the shaft 413 opposite to the tyre 410 is fastened with a nut 414. Inside the tyre 410 are provided, for example, a bearing and the like, and the tyre 410 is formed to smoothly turn around the shaft 413. A peripheral surface of the tyre 410 is, as shown in FIG. 35, formed to be contacted with a running surface S'.

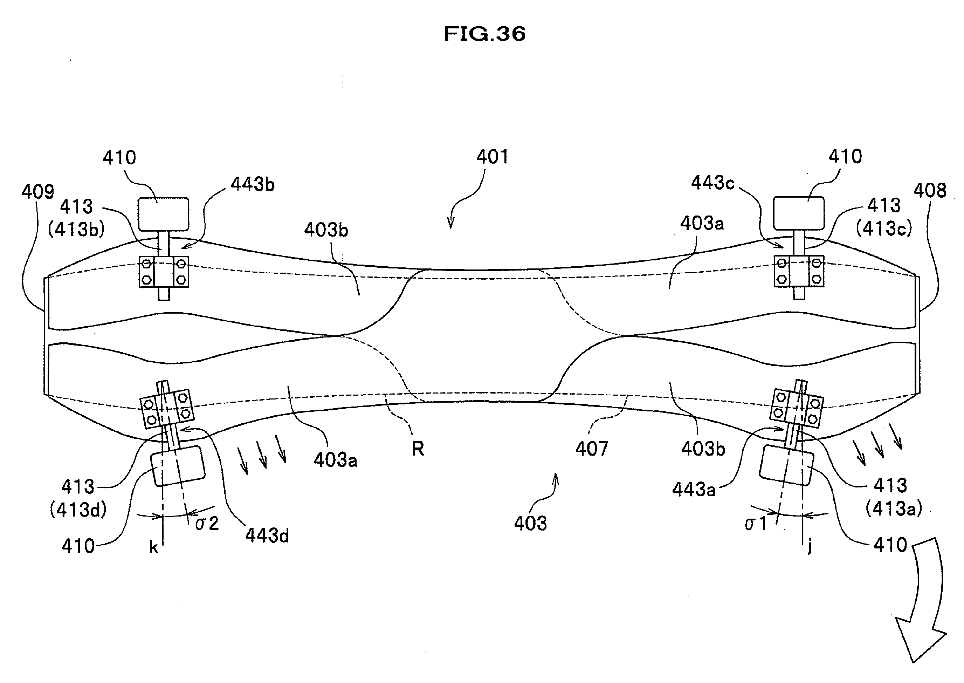

Next will be described an operation of the play apparatus 401 relating to the sixth embodiment with reference to FIG. 36. In a description thereof, the play apparatus 401 is assumed to travel toward a nose plate 408, and a case of turning to right in the travelling direction will be described.
When a player turns to right in the travelling direction, she/he moves her/his weight (center of gravity) to the right side in the travelling direction. Whereat, a protrusion part 443a of the lower layer blade 403b is protruded in the travelling direction (right-oblique front). Therefore, a shaft part 413a is tilted outside by an angle σ1 with respect to an axial line j of a width direction of the lower board 407. Furthermore, a protrusion part 443d of the upper layer blade 403a is also protruded in the travelling direction (right-oblique front). Therefore, a shaft part 413d is tilted inside by an angle σ2 with respect to an axial line k of the width direction of the lower board 407.

That is, because the tyres 410 relating to the play apparatus 401 are tilted along the side curves R formed at outer ends of the lower board 407 by operations of the upper layer blade 403a and the lower layer blade 403b when a player moves her/his weight to left and right facing the travelling direction, she/he can smoothly make a turn.

In addition, the tyres 10 may be provided not only in a case of using the play apparatus as a sleigh like in the embodiment, but also in the play apparatus 1 relating to the first embodiment, and thereby the play apparatus 1 may also be used like a skateboard. Furthermore, the tyres are provided in the play apparatuses 90 relating to the second embodiment, and thereby the apparatuses 90 may also be used like a roller skate.

Thus although the embodiments relating to the invention have been described, the invention is not limited thereto and can be appropriately changed within the spirit and scope thereof. For example, with respect to the fourth to sixth embodiments, a spring provided between the upper board and the lower board, and a support part provided between the upper layer blade and the lower layer blade may also be provided. Furthermore, an application of a play apparatus is not only a play but also an application other than the play.
Furthermore, a cushion material, for example, like a rubber may be provided outside the nose plate and the tail plate. Thereby, the play apparatus can absorb an impact even if the play apparatus collides with any of a person and an object.
Furthermore, in the descriptions of the embodiments, although the blade part is provided to be protruded outside more than the lower board, and thereby, is formed to catch a sliding surface when a player moves her/his weight, the invention is not limited thereto. That is, without providing the protrusion part at the blade part, it may also be used only as an elastic member for absorbing an impact to a player.

In the embodiments, although the blade part (elastic mechanism unit) is used for a play apparatus, the invention is not limited thereto; the blade part may also be used for other applications. For example, by providing any of a robot and an automobile with the blade part (elastic mechanism unit) relating to the invention between the upper board or the lower blade receiving an external force, it is possible to absorb an impact due to the external force.

## Claims

1. A play apparatus being **characterised by** comprising:
a body part presenting a substantially tubular shape and having a lower board configured to be contacted with a sliding surface, an upper board configured to be positioned over the lower board, a nose plate configured to connect one end of the lower board and one end of the upper board, and a tail plate configured to connect the other end of the lower board and the other end of the upper board; and
a blade part consisting of a pair of blades configured to be provided inside the body part and to be obliquely arranged with respect to a longitudinal direction axis of the lower board so as to present a substantially X-shape in a plan view thereof,
wherein each of the blades is a sheet-like elastic member, the blade comprising:
contact parts configured to be contacted with an upper surface of the lower board;
curved parts configured to be provided on a side of the nose plate and on a side of the tail plate, respectively; and
fixation parts configured to be fixed to a lower surface of the upper board.

2. The play apparatus according to claim 1 further comprising:
handle mechanism units having handle parts configured to be vertically provided on the side of the nose plate of the upper board and to be gripped by a player; and
a seat mechanism unit configured to be provided on the side of the tail plate of the upper board and to be seated by the player.

3. The play apparatus according to claim 2 further comprising:
a base shaft part configured to be projectingly provided from an edge of the upper board in an outer width direction;
push plates configured to be attached rotatably with respect to the base shaft part; and
brake parts configured to brake the play apparatus by a player pushing a lower end of the lower board against the sliding surface.

4. The play apparatus according to claim 3, wherein the brake parts comprise coil springs configured to be wound around the base shaft part, one ends of the coil springs are configured to abut with the upper board (206), and the other ends of the coil springs are configured to abut with reverse sides of the push plates.

5. The play apparatus according to claim 2 comprising:
the seat mechanism unit having the seat part, a base part configured to be installed at the upper board, and a hinge part configured to connect the side of the nose plate of the seat part and the side of the nose plate of the base part;
stopper parts having a hollow pipe configured to be extendedly provided in a width direction of the upper board below the seat part, the contact parts configured to be formed slantingly to the side of the tail plate from an end of a shaft part inserted in the hollow pipe toward the sliding surface, and abutting parts configured to be extendedly provided from ends of the shaft part and configured to abut with the seat part; and
coil springs configured to be wound around the hollow pipe, and whose one end is configured to abut a reverse side of the seat part and the other end is configured to hold the stopper parts,
wherein when the player sits on the seat part, the abutting parts rotate around the shaft part and the contact parts is separated from the sliding surface, and
wherein when the player is away from the seat part, the contact parts contact the sliding surface by reaction forces of the coil springs.

6. The play apparatus according to claim 4, wherein a protrusion strip protrudingly provided under the seat part and a depression depressingly provided at the base part are engaged with each other.

7. The play apparatus according to claim 1 further comprising a drive mechanism unit having, at a part of the lower board, caterpillars configured to be contacted with the sliding surface.

8. The play apparatus according to claim 1, wherein tyres configured to be contacted with a running surface are attached to the blades.

9. The play apparatus according to claim 1, wherein a width of the lower board is narrower than that of the upper board.

10. An elastic mechanism provided inside and between a lower board and an upper board positioned over the lower board, and consisting of a pair of blades arranged obliquely with respect to a longitudinal direction axis of the lower board so as to present a substantially X-shape in a plan view thereof, the mechanism being **characterised in that** each of the blades is a sheet-like elastic member and the mechanism comprises:
contact parts configured to be contacted with an upper surface of the lower board;
curved parts configured to be provided on both sides of the contact parts; and
fixation parts configured to be fixed to a lower surface of the upper board.
